(19) Europäisches Patentamt
European Patent Office
Office européen des brevets

(11) **EP 4 272 614 B1**

(12) **EUROPÄISCHE PATENTSCHRIFT**

(45) Veröffentlichungstag und Bekanntmachung des Hinweises auf die Patenterteilung:
**02.07.2025 Patentblatt 2025/27**

(21) Anmeldenummer: **22171229.2**

(22) Anmeldetag: **03.05.2022**

(51) Internationale Patentklassifikation (IPC):
***A47J 43/07*** *(2006.01)* ***A47J 27/00*** *(2006.01)*

(52) Gemeinsame Patentklassifikation (CPC):
**A47J 27/004; A47J 36/321; A47J 43/046; A47J 43/0716;** A47J 2043/0733

(54) **KÜCHENGERÄT MIT WAAGE FÜR BENUTZERSCHNITTSTELLE**

KITCHEN APPLIANCE WITH SCALE FOR USER INTERFACE

ROBOT DE CUISINE POURVU D'UNE BALANCE POUR L'INTERFACE UTILISATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.11.2023 Patentblatt 2023/45**

(73) Patentinhaber: **Vorwerk & Co. Interholding GmbH 42275 Wuppertal (DE)**

(72) Erfinder: **SCHMITZ, Kevin 42781 Haan-Gruiten (DE)**

(74) Vertreter: **Gille Hrabal Partnerschaftsgesellschaft mbB Patentanwälte Brucknerstraße 20 40593 Düsseldorf (DE)**

(56) Entgegenhaltungen:
EP-A1- 3 936 016    EP-B1- 3 781 002
DE-A1- 102008 040 740

**Beschreibung**

Die Erfindung betrifft ein Küchengerät mit einer Waage für ein Messen eines Gewichts von Lebensmitteln.

Ein Küchengerät ist ein Gerät, welches in einer Küche für die Zubereitung einer Speise und im Zusammenhang mit der Zubereitung einer Speise verwendet wird. Ein Küchengerät kann einen Zubereitungsraum umfassen, in dem eine Speise zubereitet werden kann. Der Zubereitungsraum kann ein unlösbarer Bestandteil des Küchengeräts sein. Der Zubereitungsraum kann aber auch durch ein Zubereitungsgefäß bereitgestellt sein, das ein lösbarer Bestandteil des Küchengeräts ist. Ist das Zubereitungsgefäß lösbarer Bestandteil, so kann das Zubereitungsgefäß getrennt von einem Basisgerät des Küchengeräts benutzt werden.

Lebensmittel können in das Zubereitungsgefäß bzw. den Zubereitungsraum gebracht werden. In dem Zubereitungsraum bzw. Zubereitungsgefäß befindliche Lebensmittel können durch das Speisenzubereitungsgefäß bearbeitet und in diesem Sinn zubereitet werden. Das Küchengerät kann beispielsweise im Zubereitungsgefäß bzw. im Zubereitungsraum befindliche ein oder mehrere Lebensmittel wiegen, mischen, zerkleinern und/oder temperieren, also zum Beispiel erhitzen.

Beispiele für Küchengeräte sind Kochgerät, Küchenmaschine, Herd, Backofen, Mikrowelle, Kühlschrank, Tiefkühltruhe, Küchenwaage, Waffeleisen, Fritteuse sowie Dampfgarer.

Mit der Waage kann das Gewicht von Lebensmitteln ermittelt werden. Beispielsweise kann das Küchengerät ein Gefäß umfassen, in welches Lebensmittel gebracht werden können, um so das Gewicht von hineingebrachten Lebensmitteln mithilfe der Waage bestimmen zu können. Die Waage umfasst mehrere Kraftsensoren umfassen, um ein Gewicht ermitteln zu können.

Aus der Druckschrift EP 3 398 495 A1 ist eine Küchenmaschine mit einem Basisgerät, einem Zubereitungsgefäß und einer Wägeeinrichtung, also einer Waage, bekannt. Durch die Wägeeinrichtung können Gewichtsänderungen ermittelt werden. Mithilfe von ermittelten Gewichtsänderungen können Zustände der Küchenmaschine ermittelt werden, so zum Beispiel ein Anheben der Küchenmaschine oder aber ein Gewicht von Lebensmitteln, die in das Zubereitungsgefäß gebracht wurden.

Aus der Druckschrift EP 3 781 002 B1 ist eine Vorrichtung zum Verarbeiten von Lebensmitteln mit einem Gewichtssensor bekannt. Durch den Gewichtssensor kann das Gewicht von Lebensmitteln bestimmt werden. Außerdem kann eine Steuereinheit Messsignale von dem Gewichtssensor empfangen und in Abhängigkeit davon den Betrieb der Vorrichtung steuern.

In der EP 3 936 016 A1 wird ein Speisenzubereitungsgerät mit einem Sensor zur Erfassung einer auf einen Teil des Speisenzubereitungsgeräts ausgeübten Druckkraft und/oder eines Gewichts einer zerkleinerten Speise beschrieben.

Die DE 10 2008 040 740 A1 betrifft eine Küchenmaschine mit einem Basisteil, an welchem eine Mehrzahl von Füßen zum Aufstellen der Küchenmaschine auf einem Untergrund angeordnet sind. Die Küchenmaschine umfasst eine Wägeeinrichtung.

Es ist Aufgabe der Erfindung, ein Küchengerät weiterzuentwickeln.

Die Aufgabe wird durch ein Küchengerät mit den Merkmalen des ersten Anspruchs gelöst. Vorteilhafte Ausgestaltungen ergeben sich aus den abhängigen Ansprüchen.

Zur Lösung der Aufgabe dient ein Küchengerät mit einer Steuerungseinrichtung für die Steuerung des Betriebs des Küchengeräts. Das Küchengerät umfasst eine Waage für ein Messen eines Gewichts von Lebensmitteln. Das Küchengerät ist so eingerichtet, dass die Waage ein Drücken auf die Oberseite des Küchengeräts erkennen kann. Erkennt die Waage ein Drücken, so kann mithilfe der Steuerungseinrichtung die Position des Drückens ermittelt werden. Die Steuerungseinrichtung kann den Betrieb des Küchengeräts in Abhängigkeit von der Position steuern.

Mit Drücken ist gemeint, dass ein Benutzer des Küchengeräts mit einem Körperteil einen Druck auf das Küchengerät ausübt. Das Körperteil kann ein Finger sein. Wird eine Kippbewegung auf das Küchengerät durch Ziehen nach oben ausgeübt, so wird dadurch das Gewicht des Küchengeräts verlagert. Eine solche Kippbewegung entspricht grundsätzlich einem Drücken auf eine Position auf der Oberseite des Küchengeräts. Beispielsweise kann ein Ziehen eines seitlichen Griffs eines Zubereitungsgefäßes nach oben eine Kippbewegung bewirken, die einem Drücken auf eine Position auf der Oberseite des Küchengeräts entspricht. Ein vollständiges Anheben eines Küchengeräts durch Ziehen nach oben entspricht jedoch nicht einem Drücken auf eine Position auf der Oberseite des Küchengeräts.

Ein Ziehen nach oben kann zur Folge haben, dass zumindest ein Kraftsensor der Waage belastet und zumindest ein anderer Kraftsensor der Waage entlastet wird. Es kann sein, dass Kraftsensoren der Waage so angeordnet sind, dass eine Entlastung eines Kraftsensors nur durch ein Ziehen nach oben erreicht werden kann. Dies kann beispielsweise der Fall sein, wenn Kraftsensoren ausschließlich am Außenumfang des Küchengeräts angeordnet sind. In diesem Fall kann zwischen einem Ziehen nach oben und einem Drücken auf die Oberseite unterschieden werden. Ein Ziehen kann insbesondere dann eine zusätzliche Eingabemöglichkeit für ein Steuern des Küchengeräts sein.

Mit einem Ziehen nach oben kann also ein Küchengerät anders gesteuert werden im Vergleich zu einem Drücken auf die Oberseite, wenn das Küchengerät so eingerichtet ist, dass zwischen einem Ziehen und einem Drücken unterschieden werden kann. Auch die Position eines Ziehens nach oben kann optional erkannt werden. Es kann also auch im Zusammenhang mit einem Ziehen nach oben in Abhängigkeit von der Position das Küchengerät durch die Steuerungseinrichtung gesteuert werden.

Mit Oberseite ist eine Oberfläche des Küchengeräts gemeint, die im bestimmungsgemäß aufgestellten Zustand des Küchengeräts von oben erreicht werden kann. Wird auf die Oberseite gedrückt, dann gibt es eine Kraft, die senkrecht auf das Küchengerät wirkt. Eine senkrechte Seitenwand des Küchengeräts ist keine Oberseite des Küchengeräts, da auf eine solche Seitenwand nicht von oben gedrückt werden kann. Wird auf eine senkrechte Seitenwand seitlich gedrückt, dann gibt es keine durch den Benutzer unmittelbar ausgeübte Druckkraft, die senkrecht auf das Küchengerät wirkt. Dies hat daher grundsätzlich nicht zur Folge, dass die Steuerungseinrichtung aufgrund des Drückens auf die senkrechte Seitenwand den Betrieb des Küchengeräts steuern kann. Wird allerdings auf eine senkrechte Seitenwand gedrückt, dann kann dadurch eine Kippbewegung und eine damit einhergehende Gewichtsverlagerung bewirkt werden. Eine solche Kippbewegung entspricht wie zuvor bereits geschildert grundsätzlich einem Drücken auf eine Position auf der Oberseite des Küchengeräts.

Ist das Küchengerät so eingerichtet, dass zwischen einer Kippbewegung, die durch ein seitliches Drücken bewirkt wird, und einem Drücken auf die Oberseite unterschieden werden kann, so kann ein seitliches Drücken eine zusätzliche Möglichkeit sein, um das Küchengerät in Abhängigkeit davon zu steuern, ob auf die Oberseite oder seitlich gedrückt wird.

Mit Küchengerät ist eine Gesamtheit von miteinander zumindest lose verbundenen Teilen gemeint, die für die Zubereitung einer Speise gemeinsam verwendet werden. Ein Kochfeld mit einem auf einem Kochfeld abgestellten Kochtopf ist dann eine Gesamtheit von Teilen, die ein Küchengerät bilden. Eine Küchenmaschine, die zusammen mit einem an der Küchenmaschine angebrachten Zubehörteil betrieben wird, ist eine Gesamtheit von Teilen, die ein Küchengerät bilden.

Das Küchengerät ist so eingerichtet, dass die Waage nicht nur das Drücken auf die Oberseite erkennen kann, sondern außerdem die Position des Drückens, also die Stelle auf der Oberseite, auf die gedrückt wurde. Wird beispielsweise auf eine mittlere Position auf die Oberseite mit einer ersten Kraft gedrückt, so misst die Waage zumindest einen ersten Messwert. Wird auf eine Position benachbart zur mittleren Position auf die Oberseite mit der ersten Kraft gedrückt, so misst die Waage zumindest einen zweiten Messwert. Die beiden Messwerte unterscheiden sich dann, weil auf unterschiedliche Positionen gedrückt wurde. Die Waage kann daher erkennen, dass auf unterschiedliche Positionen gedrückt wurde. Der oder die Messwerte der Waage sind dann ein Maß für die Position, auf die gedrückt wurde.

Die Steuerungseinrichtung ist so eingerichtet, dass diese aufgrund von ein oder mehreren Messergebnissen der Waage eine Position des Drückens ermitteln kann. Beispielsweise kann die Steuerungseinrichtung so eingerichtet sein, dass diese erkennen kann, ob auf eine mittlere Position oder auf eine Position gedrückt worden ist, die an die mittlere Position angrenzt.

Mit Steuerung des Betriebs des Speisenzubereitungsgeräts ist gemeint, dass ein Zustand des Küchengeräts geändert wird.

Eine Änderung des Zustands des Küchengeräts meint beispielsweise das Einschalten oder das Ausschalten des Küchengeräts. Befindet sich das Küchengerät im ausgeschalteten Zustand, so kann das Küchengerät nicht für die Zubereitung einer Speise genutzt werden. Das Zubereiten einer Speise setzt also den eingeschalteten Zustand voraus. Im eingeschalteten Zustand des Küchengeräts kann ein Betriebssystem des Küchengeräts gestartet sein. Im eingeschalteten Zustand des Küchengeräts können elektrische Verbraucher wie Display eingeschaltet sein. Wird ein solches Küchengerät ausgeschaltet, dann kann damit das Herunterfahren des Betriebssystems gemeint sein. Außerdem können Verbraucher wie Display ausgeschaltet sein, wenn das Küchengerät ausgeschaltet ist.

Eine Änderung des Zustands des Küchengeräts meint beispielsweise das Einstellen und/oder Ändern einer Solltemperatur, die in einem Zubereitungsraum des Speisenzubereitungsgeräts erreicht werden soll, das Einstellen und/oder Ändern einer Bewegungsgeschwindigkeit eines Werkzeugs oder einer Solltemperatur oder einer anderen Komponente des Küchengeräts oder das Einstellen und/oder Ändern eines Timers des Küchengeräts.

Umfasst das Küchengerät beispielsweise ein Misch- und/oder Schneidwerkzeug, so kann beispielsweise durch ein Drücken eine Drehgeschwindigkeit des Misch- und/oder Schneidwerkzeugs geändert werden. Mit einem Mischwerkzeug können Lebensmittel gemischt werden. Mit einem Schneidwerkzeug können Lebensmittel zerkleinert werden. Ein Werkzeug, mit dem sowohl gemischt als auch zerkleinert werden kann, kann eine Welle und von der Welle abstehende ein oder mehrere Klingen umfassen. Die Klingen können an einer Seite scharfkantig für ein Zerkleinern sein und an einer gegenüberliegenden Seite stumpf. Wird in Richtung stumpfer Kante gedreht, so wird grundsätzlich nur gemischt. Dies gilt zumindest dann, wenn mit geringer Drehzahl von beispielsweise nicht mehr als 1000 Umdrehungen pro Minute oder nicht mehr als 500 Umdrehungen pro Minute gedreht wird. Wird in Richtung scharfer Kante gedreht, so wird grundsätzlich zerkleinert. Dies gilt zumindest dann, wenn mit hoher Drehzahl von beispielsweise wenigstens 2000 Umdrehungen pro Minute oder wenigstens 5000 Umdrehungen pro Minute gedreht wird.

Umfasst das Küchengerät beispielsweise einen Ventilator, so kann beispielsweise durch ein Drücken eine Drehgeschwindigkeit des Ventilators geändert werden.

Von einer Änderung des Zustands des Küchengeräts kann umfasst sein, dass eine Messung aktiviert oder deaktiviert wird. Beispielsweise kann eine Gewichtsmessung aktiviert werden. Ist die Gewichtsmessung aktiviert und wird ein Lebensmittel beispielsweise in einen Zubereitungsraum des Küchengeräts gebracht, so kann beispielsweise das Gewicht des im Zubereitungsraum befindlichen Lebensmittels auf einem Display des Küchengeräts angezeigt werden. Ist die Gewichtsmessung deaktiviert, so wird kein gemessenes Gewicht auf dem Display angezeigt. Ein Messen und ein Anzeigen eines Messwerts sind keine Änderung des Betriebszustands des Küchengeräts im Sinne der vorliegenden Erfindung.

Von einer Änderung des Zustands des Küchengeräts kann umfasst sein, dass ein Programm oder ein Schritt in einem Programm des Küchengeräts aktiviert oder deaktiviert wird. Beispielsweise kann ein Programm für eine automatisierte oder halbautomatisierte Zubereitung eines Lebensmittels aktiviert oder deaktiviert werden. Beispielsweise kann ein Schritt in einem Programm für eine automatisierte oder halbautomatisierte Zubereitung eines Lebensmittels aktiviert werden.

Von einer Änderung des Zustands des Küchengeräts kann ein Neustart des Küchengeräts umfasst sein.

Von einer Änderung des Zustands des Küchengeräts kann umfasst sein, dass ein Informationszustand des Küchengeräts geändert wird, der sich auf den weiteren Betrieb des Küchengeräts auswirken kann. Ein Drücken auf die Oberseite des Küchengeräts kann beispielsweise dem Küchengerät die Anwesenheit eines Benutzers signalisieren. Im Anschluss daran verfügt das Küchengerät über die Information, dass ein Benutzer anwesend oder wieder anwesend ist als Voraussetzung für andere Zustandsänderungen, die nur bei Anwesenheit eines Benutzers möglich sind.

Von einer Änderung des Zustands des Küchengeräts kann also umfasst sein, dass binäre Werte des Küchengeräts geändert werden wie eingeschaltet oder ausgeschaltet, dass diskrete Werte geändert werden wie Werte für Drehzahlstufen für ein Misch- und/oder Schneidwerkzeug oder dass solche Werte kontinuierlich verändert werden.

In Abhängigkeit von der erkannten Position kann der Betrieb des Küchengeräts gesteuert werden. Wird beispielsweise auf die mittlere Position gedrückt, so kann beispielsweise das Wiegen aktiviert oder deaktiviert werden. Ist das Wiegen aktiviert, so kann das Gewicht eines Lebensmittels von dem Küchengerät gemessen und beispielsweise optisch und/oder akustisch angezeigt werden. Im deaktivierten Zustand ist dies nicht möglich. Wird beispielsweise außerhalb des mittleren Bereichs auf die Oberseite des Küchengeräts gedrückt, so kann beispielsweise das Küchengerät eingeschaltet oder ausgeschaltet werden.

Durch die Erfindung kann die Oberseite des Küchengeräts für ein Drücken zwecks Steuerung des Betriebs genutzt werden. Es steht also eine Benutzerschnittstelle zur Verfügung, die mit bereits aus anderen Gründen vorhanden Komponenten eines Küchengeräts realisiert werden kann. Die Benutzerschnittstelle kann daher mit einem geringen technischen Aufwand bereitgestellt werden. Diese Benutzerschnittstelle ist sehr unempfindlich gegenüber äußeren Einflüssen. Mithilfe der Benutzerschnittstelle können viele Betriebszustände des Küchengeräts geändert werden.

Der Bereich des Bodens eines Zubereitungsraums des Küchengeräts und/oder der Bereich genau oberhalb des Bodens eines Zubereitungsraums des Küchengeräts und/oder der Bereich einer Stellfläche für ein Zubereitungsgefäß kann zumindest während eines vorgegebenen Betriebszustands des Küchengeräts davon ausgenommen sein, dass der Betrieb des Küchengeräts durch Drücken gesteuert werden kann.

Ein Drücken auf den Boden des Zubereitungsraums hat also dann zumindest während eines vorgegebenen Betriebszustands nicht zur Folge, dass die Waage das Drücken erkennt und dann der Betrieb des Küchengeräts in Abhängigkeit von dem erkannten Drücken gesteuert wird. Drückt beispielsweise der Benutzer mit einem Finger auf eine Oberseite des Küchengeräts, die sich in Aufsicht auf das Küchengerät gesehen neben dem Boden des Zubereitungsraums befindet, so kann der Betrieb des Küchengeräts unabhängig vom Betriebszustand des Küchengeräts gesteuert werden.

Umfasst das Küchengerät eine Stellfläche, auf der ein Zubereitungsgefäß für eine Zubereitung einer Speise abgestellt werden kann, so kann der Bereich der Stellfläche zumindest während eines vorgegebenen Betriebszustands des Küchengeräts davon ausgenommen sein, dass durch Drücken ein Betriebszustand des Küchengeräts geändert werden kann. Ein Drücken auf die Stellfläche hat also dann nicht zur Folge, dass die Waage das Drücken erkennt und dann der Betrieb des Küchengeräts in Abhängigkeit von dem erkannten Drücken gesteuert wird.

Es kann ein Bereich genau oberhalb des Bodens eines Zubereitungsraums des Küchengeräts zumindest während eines vorgegebenen Betriebszustands des Küchengeräts ausgenommen sein. Ein Drücken auf einen Bereich des Küchengeräts, der genau oberhalb des Bodens des Zubereitungsraums liegt, hat also dann nicht zur Folge, dass dann der Betrieb des Küchengeräts in Abhängigkeit von dem erkannten Drücken gesteuert wird. Der Bereich oberhalb des Bodens kann beispielsweise ein Deckel eines Zubereitungsgefäßes sein. Wird auf den Deckel gedrückt und befindet sich der Deckel in Aufsicht auf den Deckel genau oberhalb des Bodens und nicht etwa seitlich neben dem Boden, dann kann dies nicht bewirken, dass die Steuerungseinrichtung den Betrieb des Küchengeräts steuert. Dies gilt zumindest für einen vorgegebenen Betriebszustand.

Es kann so vermieden werden, dass ein Einfüllen von Lebensmitteln in den Speisenzubereitungsraum von der Steuerungseinrichtung unplanmäßig so verstanden wird, dass der Betrieb des Speisenzubereitungsgeräts in einer vorgegebenen Weise zu steuern ist.

Es kann beispielsweise sein, dass ein Drücken auf einen Boden eines Speisenzubereitungsraums des Küchengeräts, auf einen Bereich genau oberhalb des Bodens des Speisenzubereitungsraums und/oder auf eine Stellfläche des Küchengeräts das Küchengerät einschalten kann. Nach einem Einschalten kann ein Steuern des Betriebs des Küchengeräts durch Drücken auf den Boden eines Speisenzubereitungsraums des Küchengeräts, auf einen Bereich genau oberhalb des Bodens des Speisenzubereitungsraums und/oder durch Drücken auf die Stellfläche des Küchengeräts nicht mehr möglich sein. Es ist also dann nicht immer ausgeschlossen, dass ein Drücken auf den Boden den Betrieb des Küchengeräts steuern kann. Stattdessen gilt dies nur im eingeschalteten Zustand des Küchengeräts.

Es kann so vermieden werden, dass ein Einfüllen von Lebensmitteln in den Speisenzubereitungsraum von der Steuerungseinrichtung unplanmäßig so verstanden wird, dass der Betrieb des Speisenzubereitungsgeräts in einer vorgegebenen Weise zu steuern ist.

Es kann beispielsweise sein, dass im eingeschalteten Zustand des Küchengeräts ein Drücken auf einen Boden eines Speisenzubereitungsraums des Küchengeräts, auf einen Bereich genau oberhalb des Bodens des Speisenzubereitungsraums und/oder auf eine Stellfläche des Küchengeräts die Waage so aktivieren kann, dass Lebensmittel gewogen werden können. Im aktivierten Zustand der Waage ist ein Steuern des Betriebs des Küchengeräts durch Drücken auf den Boden eines Speisenzubereitungsraums des Küchengeräts, auf einen Bereich genau oberhalb des Bodens des Speisenzubereitungsraums und/oder auf die Stellfläche des Küchengeräts nicht mehr möglich. Wird dann eine senkrechte Kraft auf den Boden des Speisenzubereitungsraums, auf den Bereich genau oberhalb des Bodens und/oder auf die Stellfläche ausgeübt, so wird dann immer nur ein Gewicht gemessen und beispielsweise angezeigt.

Es kann so vermieden werden, dass ein Einfüllen von Lebensmitteln in den Speisenzubereitungsraum von der Steuerungseinrichtung unplanmäßig so verstanden wird, dass der Betrieb des Speisenzubereitungsgeräts in einer vorgegebenen Weise zu steuern ist.

Das Küchengerät kann so eingerichtet sein, dass durch Bestimmung der Position ermittelt wird, ob auf den Boden des Zubereitungsraums, auf den Bereich genau oberhalb des Bodens und/oder auf die Stellfläche gedrückt worden ist.

Das Küchengerät kann so eingerichtet sein, dass die Waage bei Untätigkeit nach Ablauf eines vorgegebenen Zeitraums automatisiert deaktiviert wird. Beispielsweise kann ein Zeitraum von zwei, drei, vier oder fünf Minuten vorgegeben sein. Findet innerhalb dieses Zeitraums keine Gewichtsmessung statt, so wird die Waage für ein Wiegen nicht genutzt. Die Waage ist in diesem Sinne untätig. Die Möglichkeit zu Wiegen wird dann deaktiviert. Insbesondere werden dann von dem Küchengerät keine Gewichtsangaben angezeigt oder auf andere Weise übermittelt.

Ein Drücken auf einen Boden eines Speisenzubereitungsraums des Küchengeräts, auf einen Bereich genau oberhalb des Bodens des Speisenzubereitungsraums und/oder auf eine Stellfläche des Küchengeräts kann immer zur Folge haben, dass durch ein solches Drücken der Betrieb des Küchengeräts nicht gesteuert werden kann. Es kommt dann also nicht auf den Betriebszustand des Küchengeräts an. Es kann so besonders zuverlässig vermieden werden, dass ein Einfüllen von Lebensmitteln in den Speisenzubereitungsraum von der Steuerungseinrichtung unplanmäßig so verstanden wird, dass der Betrieb des Speisenzubereitungsgeräts in einer vorgegebenen Weise zu steuern ist.

Die Waage des Küchengeräts kann mehrere Kraftsensoren für eine Gewichtsmessung und für eine Bestimmung der Position des Drückens umfassen. Die Kraftsensoren sind in Aufsicht auf das Küchengerät gesehen räumlich voneinander getrennt. Die Kraftsensoren sind also nebeneinander angeordnet. Wird ein Gewicht durch das Küchengerät gemessen, so wird eine Gewichtskraft auf die Kraftsensoren ausgeübt. Es kann so ein Gewicht eines Lebensmittels gemessen werden.

Wird auf eine Position gedrückt, die sich genau oberhalb eines ersten Kraftsensors befindet, so misst dieser erste Kraftsensor eine größere Kraft als ein anderer zweiter Kraftsensor, der räumlich neben dem ersten Kraftsensor angeordnet ist. Wird auf eine Position gedrückt, die sich genau oberhalb des zweiten Kraftsensors befindet, so misst dieser zweite Kraftsensor eine größere Kraft als der erste Kraftsensor. Das Vorsehen von nebeneinander angeordneten Kraftsensoren erleichtert also das Erkennen einer Position auf der Oberseite des Küchengeräts, auf die gedrückt wurde. Das Küchengerät kann also eingerichtet sein, dass aus den Kräften, die auf nebeneinander angeordnete Kraftsensoren ausgeübt werden, die Position eines Drückens auf die Oberseite des Speisenzubereitungsgeräts ermittelt werden kann. Da die Kraftsensoren Teil der Waage sind, kann die Waage die Position des Drückens erkennen.

Soll eine Zeile auf der Oberseite für ein Drücken und ein damit verbundenes Bedienen des Küchengeräts genutzt werden können, dann können zwei Kraftsensoren entlang einer Linie angeordnet sein, die parallel zu der Zeile verläuft. Es können dann sehr genau Positionen entlang der Zeile ermittelt werden. Benachbart zu jedem Ende einer Zeile kann ein Kraftsensor angeordnet sein. Dies ist aber nicht erforderlich, um sehr genau eine Position ermitteln zu können. Es sollte aber ein Mindestabstand von wenigstens 2, 3 oder 4 cm zwischen den beiden Kraftsensoren vorhanden sein, um Positionen ermitteln zu können. Beispielsweise soll eine Zeile auf der Oberseite als Schieberegler dienen. Zwei Kraftsensoren können dann mit Vorteil entlang einer Linie angeordnet sein, die parallel zu der als Schieberegler dienenden Zeile verläuft.

Vorzugsweise gibt es wenigstens drei nebeneinander angeordnete Kraftsensoren, die zweidimensional verteilt angeordnet sind. Die Kraftsensoren sind also nicht ausschließlich entlang einer geraden Linie angeordnet. Die zur Verfügung stehende Oberseite des Küchengeräts kann dann besonders vollständig für ein Steuern des Betriebs des Küchengeräts genutzt werden.

Vorzugsweise gibt es genau drei nebeneinander angeordnete Kraftsensoren, die zweidimensional verteilt angeordnet sind. Die drei Kraftsensoren spannen dann also ein Dreieck auf. Die zur Verfügung stehende Oberseite des Küchengeräts kann dann besonders vollständig für ein Steuern des Betriebs des Küchengeräts genutzt werden, ohne dafür übermäßig viele Kraftsensoren verwenden zu müssen.

Der Abstand zwischen nebeneinander angeordneten Kraftsensoren kann immer wenigstens 5 cm, bevorzugt immer wenigstens 8 cm, besonders bevorzugt immer wenigstens 10 cm betragen. Weiter verbessert kann dadurch die Position auf der Oberseite des Küchengeräts sehr genau ermittelt werden.

Vorzugsweise bilden die Kraftsensoren Füße des Küchengeräts. Auf den Füßen ist das Küchengerät aufgestellt, um das Küchengerät bestimmungsgemäß für die Zubereitung einer Speise verwenden zu können. Die Kraftsensoren werden bei dieser Ausgestaltung doppelt genutzt. Der technische Herstellungsaufwand kann so geringgehalten werden. Gibt es nur drei Kraftsensoren, dann gibt es nur drei Füße. Das Küchengerät kann dann sehr standsicher aufgestellt werden, ohne dass dafür ein ebener Untergrund erforderlich wäre.

Es sind aber auch mehr als drei Kraftsensoren möglich, die als Füße dienen können. Es können beispielsweise vier, fünf oder sechs Füße vorgesehen sein, die zugleich Kraftsensoren der Waage sind.

Kraftsensoren können auf dem Umfang eines Kreises angeordnet sein. Unmittelbar benachbarte Kraftsensoren können dann immer gleiche Abstände aufweisen. Es kann auch so sehr genau die Position auf der Oberseite des Küchengeräts ermittelt werden, auf die gedrückt wurde.

Das Küchengerät kann so eingerichtet sein, dass mithilfe der Waage die Stärke der durch ein Drücken bewirkten Druckkraft auf das Küchengerät erkannt werden kann. Die Steuerungseinrichtung des Küchengeräts kann so eingerichtet sein, dass diese den Betrieb des Küchengeräts in Abhängigkeit von der Stärke der Druckkraft steuern kann. Diese Ausgestaltung erweitert die Möglichkeiten der Benutzerschnittstelle, um den Betrieb des Küchengeräts besonders vielfältig und/oder besonders intuitiv steuern und bedienen zu können. Beispielsweise kann ein besonders starkes Drücken mit einer Kraft oberhalb eines vorgegebenen Druckschwellwertes bewirken, dass das Küchengerät eingeschaltet oder ausgeschaltet wird. Beispielsweise kann ein besonders starkes Drücken mit einer Kraft oberhalb eines vorgegebenen Druckschwellwertes bewirken, dass eine Solltemperatur oder eine Drehzahl eines Werkzeugs oder Ventilators kontinuierlich oder stufenweise erhöht wird. Bei dieser Ausgestaltung kann also der Betrieb des Küchengeräts in Abhängigkeit von vorgegebenen Druckschwellwerten gesteuert werden.

Das Küchengerät kann so eingerichtet sein, dass mithilfe der Waage eine Veränderung der Position des Drückens auf der Oberseite des Küchengeräts erkannt werden kann. Die Steuerungseinrichtung des Küchengeräts kann so eingerichtet sein, dass diese den Betrieb des Küchengeräts in Abhängigkeit von der Veränderung der Position steuern kann. Diese Ausgestaltung erweitert die Möglichkeiten der Benutzerschnittstelle, um den Betrieb des Küchengeräts besonders vielfältig und/oder besonders intuitiv steuern zu können. Es können bei dieser Ausgestaltung Gleitbewegungen bzw. Wischbewegungen auf der Oberseite des Küchengeräts für ein Steuern des Betriebs genutzt werden. Beispielsweise kann eine Gleitbewegung in einer ersten Richtung bewirken, dass die Drehgeschwindigkeit eines Werkzeugs des Küchengeräts oder Ventilators oder eine Solltemperatur erhöht werden. Eine Gleitbewegung bzw. Wischbewegung in entgegengesetzter Richtung kann bewirken, dass die Drehgeschwindigkeit eines Werkzeugs des Küchengeräts oder Ventilators oder eine Solltemperatur verringert werden.

Vorzugsweise sind wenigstens zwei Kraftsensoren parallel und benachbart zu dem Bereich angeordnet, der für eine Gleitbewegung bzw. Wischbewegung vorgesehen ist. Eine Wischbewegung kann dann besonders genau erkannt werden. Eine gedachte Linie zwischen zwei Kraftsensoren verläuft dann beispielsweise parallel zu dem Bereich, der für eine geradlinige Wischbewegung vorgesehen ist. Die beiden Kraftsensoren können beispielsweise genau unter dem Bereich vorhanden sein, der für eine Wischbewegung vorgesehen ist. Der Bereich für eine Wischbewegung kann dann beispielsweise durch eine geradlinig verlaufende Rille oder eine geradlinig verlaufende Erhebung gekennzeichnet sein. Der Bereich für eine Wischbewegung kann farblich markiert sein.

Das Küchengerät kann so eingerichtet sein, dass mithilfe der Waage die Dauer des Drückens auf die Oberseite des Küchengeräts erkannt werden kann. Das Küchengerät kann so eingerichtet sein, dass die Steuerungseinrichtung den Betrieb des Küchengeräts in Abhängigkeit von der Dauer steuern kann. Es können bei dieser Ausgestaltung ein oder mehrere Zeitdauerschwellwerte vorgegeben sein. Ein Zeitdauerschwellwert kann beispielsweise drei Sekunden betragen. Wird länger als drei Sekunden auf die Oberseite des Küchengeräts gedrückt, so kann dadurch das Küchengerät beispielsweise eingeschaltet oder ausgeschaltet werden. Das Küchengerät kann also in Abhängigkeit von vorgegebenen Zeitdauerschwellwerten gesteuert werden. Diese Ausgestaltung erweitert die Möglichkeiten der Benutzerschnittstelle, um den Betrieb des Küchengeräts besonders vielfältig und/oder besonders intuitiv steuern zu können.

Das Küchengerät kann so eingerichtet sein, dass mithilfe der Waage die Häufigkeit des Drückens innerhalb eines vorgegebenen Zeitraums erkannt werden kann. Das Küchengerät kann so eingerichtet sein, dass die Steuerungseinrichtung des Küchengeräts den Betrieb des Küchengeräts in Abhängigkeit von der Häufigkeit steuern kann. Beispielsweise kann ein Zeitraum von zwei, drei oder vier Sekunden vorgegeben sein. Wird innerhalb eines solchen vorgegebenen Zeitraums nur einmal gedrückt, so wird der Betrieb des Küchengeräts anders gesteuert im Vergleich zu einem zweimaligen Drücken oder dreimaligem Drücken innerhalb des vorgegebenen Zeitraums.

Es sind Kombinationen möglich. So kann es beispielsweise sein, dass erst auf eine vordere linke Gehäusehälfte gedrückt werden muss, damit im Anschluss daran ein Drücken auf eine rechte Gehäusehälfte mit erhöhter Kraft Werte die zum Beispiels Drehzahlwerte oder Solltemperaturwerte kontinuierlich oder stufenweise zu verändern.

Das Küchengerät kann also so eingerichtet sein, dass mithilfe der Waage das Küchengerät eingeschaltet und/oder ausgeschaltet werden kann. Das Küchengerät kann also so eingerichtet sein, dass mithilfe der Waage für den Betrieb des Küchengeräts einstellbare Werte, beispielsweise Werte für Drehgeschwindigkeiten oder Werte für Solltemperaturen, stufenlos oder stufenweise mithilfe der Waage eingestellt werden können. Dies kann in Abhängigkeit von der Position des Drückens oder in Abhängigkeit von der Art des Drückens geschehen.

Das Küchengerät kann beispielsweise so eingerichtet sein, dass durch ein starkes, von der Waage erkanntes Drücken auf das Küchengerät das Küchengerät heruntergefahren wird. Das Küchengerät kann beispielsweise so eingerichtet sein, dass durch einen von der Waage erkannten Schlag auf das Küchengerät und damit durch ein besonders kurzes Drücken das Küchengerät notfallmäßig ausgeschaltet wird. Das Küchengerät kann beispielsweise so eingerichtet sein, dass durch ein leichtes, von der Waage erkanntes Drücken eine Funktion des Küchengeräts eingeschaltet wird. Durch ein leichtes Drücken kann beispielsweise das Drehen eines Mischwerkzeugs und/oder Schneidwerkwerkzeugs des Küchengeräts und damit eine Funktion des Küchengeräts eingeschaltet oder ausgeschaltet werden. Durch ein leichtes Drücken kann beispielsweise das Einstellen einer Solltemperatur des Küchengeräts und damit eine Funktion des Küchengeräts eingeschaltet oder ausgeschaltet werden. Durch ein leichtes Drücken kann beispielsweise das Wiegen und Anzeigen eines Gewichts und damit eine Funktion des Küchengeräts eingeschaltet oder ausgeschaltet werden. Durch ein leichtes Drücken kann beispielsweise während des Wiegens ein angezeigtes Gewicht auf Null zurückgesetzt werden.

Kann bei einem Küchengerät eine Solltemperatur eingestellt werden, dann umfasst das Küchengerät eine Temperiereinrichtung, um eine eingestellte Solltemperatur erreichen zu können. Eine Temperiereinrichtung kann kühlen und/oder erhitzen. Das Küchengerät kann beispielsweise eine Heizeinrichtung umfassen. Die Heizeinrichtung kann sich im Zubereitungsraum bzw. Zubereitungsgefäß befinden. Der Zubereitungsraum bzw. das Zubereitungsgefäß können beispielsweise durch Induktion auf eine Solltemperatur gebracht werden. Ein Basisgerät kann Mittel umfassen, mit denen ein Zubereitungsraum bzw. Zubereitungsgefäß induktiv erhitzt werden kann.

Das Küchengerät kann so eingerichtet sein, dass eine Steuerungseinrichtung des Küchengeräts den Betrieb des Küchengeräts in Abhängigkeit von einem erkannten Drücken auf die Oberseite des Küchengeräts nur dann steuern kann, wenn der Druck einen vorgegebenen minimalen Druckschwellwert überschreitet und/oder wenn der Druck einen vorgegebenen maximalen Druckschwellwert unterschreitet.

Durch Vorsehen eines minimalen Druckschwellwerts kann vermieden werden, dass ein versehentliches Berühren des Küchengeräts eine unplanmäßige Zustandsänderung bewirkt. Störungen können so vermieden werden.

Durch Vorsehen eines maximalen Druckschwellwerts kann vermieden werden, dass eine unplanmäßige Zustandsänderung aufgrund einer Druckkraft bewirkt werden kann, die kaum durch Drücken mit einem Finger erreicht werden kann. Alternativ oder ergänzend kann so erreicht werden, dass ein Nutzer es vermeiden wird, mit einer übermäßig großen Kraft zu drücken. Störungen können so vermieden werden.

Das Küchengerät kann so eingerichtet sein, dass eine Steuerungseinrichtung des Küchengeräts den Betrieb des Küchengeräts in Abhängigkeit von einem erkannten Drücken auf die Oberseite des Küchengeräts nur dann steuern kann, wenn ein vorgegebener minimaler Druckanstiegsschwellwert überschritten wird und/oder wenn der Druck einen vorgegebenen maximalen Druckanstiegsschwellwert überschreitet. Es kann also Differenzierungsmaßnahmen geben, um zwischen gewollten und ungewollten Eingaben besonders zuverlässig unterscheiden zu können. Wird auf die Oberseite des Küchengeräts mit einem Finger gedrückt, so steigt der Druck in Abhängigkeit von der Bewegungsgeschwindigkeit des Fingers an. Es gibt typische Werte für einen Anstieg der dann gemessenen Druckkraft. Steigt eine gemessene Druckkraft in untypischer Weise, so ist dies ein Indiz dafür, dass nicht planmäßig mit einem Finger auf die Oberseite des Küchengeräts gedrückt wurde. Durch Vorsehen von Druckanstiegsschwellwerten kann daher verbessert erreicht werden, dass nur ein planmäßiges Drücken auf die Oberseite des Küchengeräts ein Steuern des Betriebs des Küchengeräts bewirken kann.

Das Küchengerät kann so eingerichtet sein, dass das Küchengerät eine Speise mithilfe eines elektronisch gespeicherten Rezepts zumindest teilautomatisiert zubereiten kann. Das Küchengerät kann so eingerichtet sein, dass eine Steuerungseinrichtung des Küchengeräts den Betrieb des Küchengeräts in Abhängigkeit von einem erkannten Drücken auf die Oberseite des Küchengeräts in Kombination mit vom Rezept abhängigen Informationen steuern kann. Damit ist umfasst, dass zumindest während einer rezeptgesteuerten, teilautomatisierten oder automatisierten Zubereitung einer Speise ein Drücken auf die Oberseite des Küchengeräts eine Steuerung nur dann bewirkt, wenn dies von dem Rezept vorgesehen wird. Alternativ oder ergänzend kann zumindest während einer rezeptgesteuerten, teilautomatisierten oder automatisierten Zubereitung einer Speise ein Drücken auf die Oberseite den Zustand des Küchengeräts nur so verändern, wie dies von dem Rezept vorgegeben wird. Beispielsweise kann das Rezept während der Zubereitung einer Speise vorsehen, dass eine Solltemperatur eingestellt wird. Durch leichtes Drücken auf die Oberseite kann dann nur die durch das Rezept vorgegebene Solltemperatur eingestellt werden. Ein anderer Zustand des Küchengeräts kann dann nicht durch leichtes Drücken geändert werden. Störungen aufgrund von unplanmäßiger Kraft, die auf die Oberseite des Küchengeräts ausgeübt werden, können so besonders zuverlässig vermieden werden.

Zumindest während einer rezeptgesteuerten, teilautomatisierten oder automatisierten Zubereitung einer Speise kann beispielsweise ein leichtes Drücken immer nur das bewirken, was nach dem Rezept an Möglichkeiten vorgegeben wird. In der Regel wird dann ein leichtes Drücken bestätigen, dass eine nach Rezept vorgesehene Einstellung vorgenommen werden soll wie zum Beispiel das Einstellen einer Drehgeschwindigkeit für ein Misch- und/oder Schneidwerkzeug, das Einstellen einer Solltemperatur oder das Einstellen eines Timers. Anstelle eines leichten Drückens kann auch ein langes Drücken, ein zweimaliges Drücken innerhalb eines vorgegebenen Zeitraums oder eine Wischbewegung vorgesehen sein. Störungen aufgrund von unplanmäßiger Kraft, die auf die Oberseite des Küchengeräts ausgeübt werden, können so besonders zuverlässig vermieden werden.

Es kann bei einer rezeptgesteuerten, halbautomatisierten oder vollautomatisierten Zubereitung einer Speise eine Position für ein Drücken vorgesehen sein, um die rezeptgesteuerte Zubereitung einer Speise verlassen zu können.

Das Küchengerät kann so eingerichtet sein, dass die Steuerungseinrichtung des Küchengeräts den Betrieb des Küchengeräts in Abhängigkeit von einem erkannten Drücken auf die Oberseite des Küchengeräts in Kombination mit einem Gerätezustand des Küchengeräts steuern kann. Damit ist gemeint, dass die Steuerungseinrichtung im Fall eines Drückens auf die Oberseite den Zustand des Küchengeräts prüft und in Anhängigkeit von dem Ergebnis dieser Prüfung den Betrieb des Küchengeräts steuert.

Beispielsweise wird durch das Küchengerät eine Speise halbautomatisiert mithilfe eines Rezepts Schritt für Schritt zubereitet. Im Rahmen der Speisenzubereitung kann das Speisenzubereitungsgerät eine bestimmte Eingabe erwarten wie zum Beispiel eine Bestätigung, dass ein nächster Schritt des Rezepts durchgeführt werden soll. Dies kann auf einem Display beispielsweise mit "weiter" dem Benutzer signalisiert werden. Ein Drücken auf eine bestimmte Position oder alternativ auf eine beliebige auf der Oberseite kann nun den Start des nächsten Rezeptschritts auslösen. Die bestimmte Position kann optisch gekennzeichnet sein, so zum Beispiel durch "ok". Erwartet das Küchengerät eine bestimmte Eingabe, so kann dies damit verbunden sein, dass es andere Eingaben bzw. Steuerungsmöglichkeiten durch Drücken gibt, die zu diesem Zeitpunkt, also temporär, ausgeschlossen sind.

Beispielsweise kann ein Bereich von Griffen eines Zubereitungsgeräts nur dann für ein Steuern durch Drücken zur Verfügung stehen, wenn ein Basisgerät des Küchengeräts die Anwesenheit des Zubereitungsgefäßes detektiert hat. Beispielsweise kann das Küchengerät optional eine Schneidscheibe für ein definiertes Zerkleinern von Lebensmitteln umfassen, die nur mit geringen Drehzahlen von beispielsweise weniger als 1000 Umdrehungen pro Minute betrieben werden darf. Detektiert das Küchengerät die Anwesenheit der Schneidscheibe, so kann das Einstellen von höheren Drehzahlen durch Drücken oder Wischbewegungen ausgeschlossen sein.

Dass in Abhängigkeit vom einem detektierten Gerätezustand Einstellmöglichkeiten temporär ausgeschlossen sein können, stellt eine eigenständige Erfindung dar. Dies gilt insbesondere für das zustandsabhängige Begrenzen von Drehzahlen bei einer Küchenmaschine, die mit optionalem Zubehör wie Schneidscheibe oder Saftpresse betrieben werden kann, sowie für das zustandsabhängige Begrenzen von maximal möglichen Solltemperaturen.

Können unterschiedlich große Zubereitungsgefäße eingesetzt werden, so kann ein ausgewähltes Zubereitungsgefäß ein Gerätezustand sein, der sich auf die Steuerungsmöglichkeiten durch Drücken auf die Oberseite des Küchengeräts auswirkt. Die kann in entsprechender Weise für Ausrichtungen von Zubehörteilen gelten.

Das Küchengerät kann ein Basisgerät mit einer Stellfläche für ein Zubereitungsgefäß umfassen. Die Steuerungseinrichtung des Küchengeräts kann ausgewählte Funktionen des Küchengeräts in Abhängigkeit von einem erkannten Drücken auf die Oberseite des Gehäuses beispielsweise nur dann steuern kann, wenn das Zubereitungsgefäß auf der Stellfläche aufgestellt ist. Auch dies kann dazu beitragen, Störungen aufgrund von unplanmäßigem Drücken zu vermeiden.

Das Küchengerät kann eine Küchenmaschine sein, die ein Misch- und/oder Schneidwerkzeug im Zubereitungsgefäß und einen Motor im Basisgerät für ein Antreiben des Misch- und/oder Schneidwerkzeugs umfasst. Eine Küchenmaschine kann außerdem eine Heizeinrichtung umfassen, mit der das Zubereitungsgefäß erhitzt werden kann.

Mehrere Kraftsensoren vorzusehen, um so eine Oberfläche eines Geräts zweidimensional als Benutzerschnittstelle zur Steuerung oder Bedienung des Geräts verwenden zu können, kann auch auf andere Geräte angewendet werden. Das Gerät kann beispielsweise ein anderes Haushaltsgerät wie zum Beispiel ein Staubsauger sein. Der Staubsauger kann also eingerichtet sein, dass die Position eines Drückens auf seiner Oberseite erkannt und eine Steuerungseinrichtung des Staubsaugers in Abhängigkeit von der Position des Drückens den Betrieb des Staubsaugers steuern kann. Der Vorteil einer solchen Schnittstelle besteht darin, dass der Staubsauger über eine geschlossene und robuste Oberfläche bedient werden kann und der technische Herstellungsaufwand gering ist. Im Fall des Staubsaugers entfällt die Funktion, etwas wiegen zu können. Dies gilt in gleicher Weise für viele andere Geräte. Ansonsten gilt das zuvor gesagte auch für andere Geräte, die kein Küchengerät sind und/oder die nicht für ein Wiegen von zum Beispiel Lebensmitteln bestimmt und geeignet sind.

Die Oberfläche eines jeden Geräts kann Symbole, Zeichen, Worte, Buchstaben, Erhebungen und/oder Vertiefungen aufweisen, durch die angezeigt werden können, welcher Druck auf welche Position gegebenenfalls in Abhängigkeit von Gerätezuständen was bewirken kann. Alternativ oder ergänzend können Symbole, Zeichen, Worte, Buchstaben, Erhebungen und/oder Vertiefungen Gerätezustände anzeigen, um beispielsweise anzuzeigen, welche Eingaben bei welchem Gerätezustand möglich sind. So kann beispielsweise die Oberseite eines Geräts ein Schaltersymbol aufweisen. Wird auf das Schaltersymbol gedrückt, so kann beispielsweise dadurch das Gerät eingeschaltet oder ausgeschaltet werden. Auf der Oberseite kann ein Lautsprechersymbol dargestellt sein. Ein Druck auf das Lautsprechersymbol kann dann beispielsweise den Lautsprecher des Geräts einschalten oder ausschalten. Auf der Oberseite kann ein Symbol für einen Schieberegler oder Drehregler dargestellt sein. Ein Gleiten entlang des Symbols für den Schieberegler oder entlang des Außenrands des Drehregler-Symbols kann dann beispielsweise eine Leistung des Geräts verändern, so zum Beispiel die Saugleistung eines Staubsaugergerätes.

Eine beispielsweise kreisrunde Wölbung nach Innen oder nach Außen kann die Position für ein Drücken anzeigen. Eine Rinne kann die Position für eine Wisch- bzw. Gleitbewegung anzeigen.

Ein Gerät bzw. Küchengerät kann neben der Möglichkeit, mithilfe einer Waage bzw. mithilfe von Kraftsensoren ein Gerät zu steuern und damit auch zu bedienen, auch klassische Benutzerschnittstellen umfassen wie Touchscreen, Drehknopf oder Schalter. Zur Erfindung gehört auch, dass ein Teil eines Küchengeräts durch ein Ziehen nach oben angehoben und dadurch der Betrieb des Küchengeräts gesteuert wird. Beispielsweise kann das Küchengerät ein Zubereitungsgefäß umfassen, welches auf ein Basisgerät des Küchengeräts während des Betriebs lose aufgesetzt ist. Wird das Zubereitungsgefäß angehoben, so kann dadurch der Betrieb des Küchengeräts mithilfe der Steuerungseinrichtung gesteuert werden. Es kann beispielsweise eine Stromzufuhr zu einer Heizeinrichtung des Küchengeräts unterbrochen werden, sobald die Waage ein Anheben des Zubereitungsgefäßes detektiert. Diese Ausgestaltung der Erfindung stellt auch eine eigenständige Lösung für das Problem dar, eine technisch einfache und robuste Benutzerschnittstelle zur Verfügung zu stellen.

Nachfolgend wird die Erfindung näher erläutert.

Es zeigen:

Die Figur 1 zeigt ein erstes Küchengerät und zwar eine Küchenmaschine.

Die Figur 2 zeigt eine Aufsicht auf ein zweites Küchengerät.

Die Figur 3 zeigt eine Aufsicht auf ein drittes Küchengerät.

Die Figur 4 zeigt Messergebnisse.

Die Figuren 5 und 6 zeigen eine Aufsicht auf ein Küchengerät mit vorgegebenen Eingabepositionen.

Die Figur 7 zeigt eine Auswertung der Messergebnisse aus Figur 4.

Die Figur 8 zeigt ein Ablaufdiagramm.

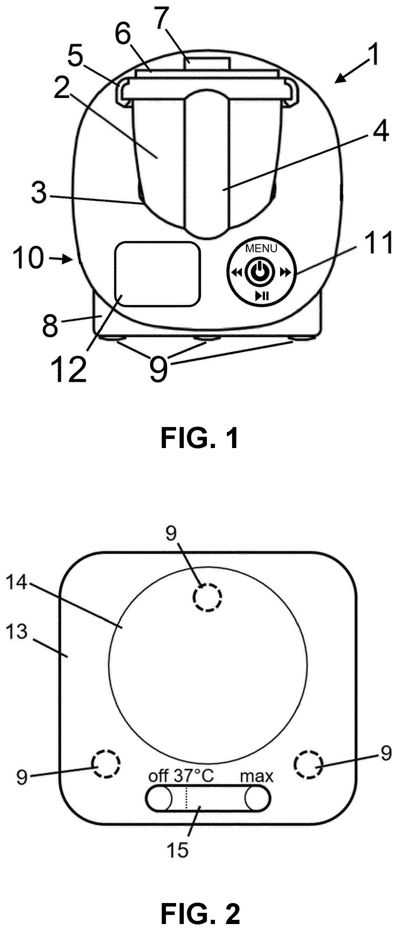

Die Figur 1 zeigt eine Küchenmaschine 1. Die Küchenmaschine 1 umfasst als Zubereitungsraum für eine Speise ein Gefäß 2, welches in eine Halterung 3 der Küchenmaschine 1 eingesetzt ist. Das Gefäß 2 umfasst einen Griff 4, um das Gefäß 2 aus der Halterung 3 der Küchenmaschine 1 leicht entfernen zu können. Die Küchenmaschine umfasst einen Schließmechanismus mit drehbar gelagerten Armen 5. In der in der Figur 1 gezeigten Schließstellung umschließen die Arme 5 einen Deckel 6. Dadurch ist der Deckel 6 dann fest mit dem Gefäß 2 verbunden. Wird der Schließmechanismus durch Drehen der Arme 5 geöffnet, dann kann der Deckel 6 vom Gefäß 2 entfernt werden.

Der Deckel 6 umfasst eine Öffnung, in welches ein Gefäß 7 eingesetzt ist. Durch das Gefäß 7 ist die Öffnung in dem Deckel 6 verschlossen. Das Gefäß 7 kann jederzeit von der Öffnung abgehoben werden, sodass dann eine Öffnung bereitstellt ist, durch die hindurch eine Zutat in das Gefäß 2 eingefüllt werden kann. Das Gefäß 7 kann als Dosierhilfe dienen. Das Gefäß 7 kann transparent sein und somit eine Sicht in das Zubereitungsgefäß hinein ermöglichen.

Die Küchenmaschine 1 umfasst für ein Aufstellen ein Fußteil 8 mit drei Füßen 9. Die drei Füße 9 sind drei Kraftsensoren 9, die unabhängig voneinander eine Kraft messen können. Wird auf die Oberseite der Küchenmaschine 1 gedrückt, so messen sämtliche drei Kraftsensoren 9 jeweils eine Kraft, die nicht nur von der Stärke des Drückens, sondern auch von der Position des Drückens abhängt.

Ein Kraftsensor 9 kann einen Federkörper umfassen. Ein jeder Federkörper kann durch Drücken auf die Oberseite der Küchenmaschine 1 komprimiert oder gedehnt werden. Auf der Oberseite des Federkörpers kann ein Dehnungsmessstreifen so angebracht sein, dass der Dehnungsmessstreifens gestaucht wird, wenn der Federkörper komprimiert wird. Die Länge des Dehnungsmessstreifens kann also durch das Komprimieren des Federkörpers verkürzt werden. Die Länge des Dehnungsmessstreifens kann durch das Dehnen des Federkörpers größer werden. Eine Änderung der Länge des Dehnungsmessstreifens verändert seinen elektrischen Widerstand. Der elektrische Widerstand ist damit beispielsweise ein Maß für die Kraft, mit der der Federkörper komprimiert worden ist. Der elektrische Widerstand eines jeden Dehnungsmessstreifens kann mithilfe der Steuerungseinrichtung der Küchenmaschine 1 ermittelt werden. Die Steuerungseinrichtung erhält so eine Information über die Kräfte, die auf die Füße 9 ausgeübt wurden.

Die drei Füße 9 können so angeordnet sein, dass diese ein Dreieck mit drei gleich langen Seiten aufspannen. Anders ausgedrückt sind die drei Füße entlang eines Kreises angeordnet und unmittelbar benachbarte Füße weisen untereinander gleiche Abstände auf. Die Länge einer jeden Seite des Dreiecks kann beispielsweise wenigstens 5 cm, wenigstens 6 cm, wenigstens 8 cm oder wenigstens 10 cm betragen. Eine solche Anordnung ermöglicht eine besonders genaue Positionsbestimmung mit einem geringen Herstellungsaufwand.

Das Fußteil 8 und die Halterung 3 sind Teil des Basisgeräts 10 der Küchenmaschine 1. Im Basisgerät 10 sind beispielsweise ein oder mehrere Motoren, eine Steuerungseinheit, eine Funkeinheit für eine drahtloses Empfangen und/oder Senden von Daten und/oder eine Stromzufuhr zu dem Heizelement des Zubereitungsgefäßes 2 angeordnet. Ein Motor im Basisgerät kann ein Antrieb für ein Misch- und/oder Schneidwerkzeug im Zubereitungsgefäß 2 sein. Ein Motor im Basisgerät kann ein Antrieb für die Arme 5 und damit für ein Verriegeln des Deckels 6 sein.

Das Basisgerät 10 umfasst eine Oberseite. Auf der Oberseite kann sich eine optische Darstellung eines Kreises 11 befinden. Innerhalb des Kreises kann am rechten Rand ein Vorwärtssymbol gezeigt sein. Am linken Rand kann ein Rückwärtssymbol gezeigt sein. Am unteren Rand kann ein Start-Pause-Symbol dargestellt sein. Am oberen Rand kann sich innerhalb des Kreises 11 eine Beschriftung "MENU" befinden. In der Mitte des Kreises 11 kann es ein An-Aus-Schaltersymbol geben.

Ein Drücken auf das An-Aus-Schaltersymbol kann die Küchenmaschine beispielsweise einschalten oder ausschalten. Mit Einschalten ist hier gemeint, dass ein Betriebssystem der Küchenmaschine 1 startet, also hochgefahren wird, und ein Display 12 der Küchenmaschine 1 eingeschaltet wird. Mit Ausschalten ist gemeint, dass das Betriebssystem der Küchenmaschine 1 heruntergefahren und das Display 12 der Küchenmaschine 1 ausgeschaltet wird.

Ist die Küchenmaschine 1 eingeschaltet, so können die weiteren Symbole innerhalb des Kreises 11 für ein Steuern und Bedienen der Küchenmaschine 1 verwendet werden. Durch Drücken auf die Beschriftung "MENU" kann beispielsweise eine Darstellung auf dem Display 12 verändert werden. Auf dem Display 12 kann beispielsweise eine Anzeige erscheinen, dass eine Solltemperatur eingestellt werden kann, auf die der Innenraum des Zubereitungsgefäßes 2 aufgeheizt werden kann und soll. Durch anschließendes einmaliges Drücken auf das Vorwärtssymbol kann dann beispielsweise die Solltemperatur um eine Stufe von beispielsweise 5°C erhöht werden. Durch langes Drücken auf das Vorwärtssymbol wird die Solltemperatur beispielsweise kontinuierlich stufenweise Schritten erhöht, bis nicht mehr gedrückt wird oder die maximal mögliche Solltemperatur eingestellt ist. Jeder Schritt bzw. jede Stufe kann ein Erhöhen der Solltemperatur um beispielsweise 5°C oder 10°C sein. Es kann aber auch unterschiedliche lange Schritte geben, also beispielsweise zunächst eine Erhöhung um 5°C pro Schritt bzw. Stufe und später um einen anderen Wert von beispielsweise lediglich 3°C oder 4°C, um beispielsweise eine Temperatur von 98°C oder 99°C als Solltemperatur einstellen zu können. Durch einmaliges Drücken auf das Rückwärtssymbol kann dann beispielsweise die Solltemperatur um eine Stufe von beispielsweise 5°C verringert werden. Durch langes Drücken auf das Rückwärtssymbol wird die Solltemperatur beispielsweise kontinuierlich stufenweise verringert, bis nicht mehr gedrückt wird oder die minimal mögliche Solltemperatur eingestellt ist. Durch anschließendes Drücken auf das Start-Pause-Symbol kann beispielsweise das Heizen des Innenraums gestartet werden. Ein nochmaliges Drücken des Start-Pause-Symbols kann dann das Heizen beispielsweise unterbrochen werden.

Durch nochmaliges Drücken auf die Beschriftung "MENU" kann die Anzeige im Display 12 so geändert werden, dass beispielsweise nun eine Drehgeschwindigkeit für ein im Zubereitungsgefäß befindliches Misch- und/oder Schneidwerkzeug eingestellt werden kann. Durch anschließendes einmaliges Drücken auf das Vorwärtssymbol kann dann beispielsweise die Drehgeschwindigkeit des Misch- und/oder Schneidwerkzeugs um eine Stufe von beispielsweise Stufe 1 auf Stufe 2 erhöht werden. Durch langes Drücken auf das Vorwärtssymbol wird die Drehgeschwindigkeit beispielsweise kontinuierlich stufenweise erhöht, bis nicht mehr gedrückt wird oder die maximal mögliche Stufe eingestellt ist. Durch einmaliges Drücken auf das Rückwärtssymbol kann dann beispielsweise die Drehgeschwindigkeit um eine Stufe verringert werden. Durch langes Drücken auf das Rückwärtssymbol wird die Drehgeschwindigkeit beispielsweise kontinuierlich stufenweise verringert, bis nicht mehr gedrückt wird oder die minimal mögliche Drehgeschwindigkeit eingestellt ist. Durch anschließendes Drücken auf das Start-Pause-Symbol kann beispielsweise das Drehen des Misch- und/oder Schneidwerkzeugs mit der eingestellten Drehgeschwindigkeit gestartet werden. Ein nochmaliges Drücken des Start-Pause-Symbols kann dann das Drehen beispielsweise unterbrechen.

Durch nochmaliges Drücken auf die Beschriftung "MENU" kann die Anzeige im Display 12 so geändert werden, dass beispielsweise nun ein Timer eingestellt werden kann. Durch anschließendes einmaliges Drücken auf das Vorwärtssymbol kann dann beispielsweise ein Zeitraum für den Timer beispielsweise um eine Sekunde erhöht werden. Durch langes Drücken auf das Vorwärtssymbol wird der Zeitraum beispielsweise kontinuierlich erhöht, bis nicht mehr gedrückt wird oder der maximal mögliche Zeitraum eingestellt ist. Durch einmaliges Drücken auf das Rückwärtssymbol kann dann beispielsweise der Zeitraum um eine Sekunde verringert werden. Durch langes Drücken auf das Rückwärtssymbol wird der Zeitraum beispielsweise kontinuierlich verringert, bis nicht mehr gedrückt wird oder der minimal mögliche Zeitraum eingestellt ist. Durch Einstellen des Timers kann beispielsweise eingestellt werden, wie lange geheizt wird und/oder wie lange das Misch- und/oder Schneidwerkzeug gedreht wird. Ist der Timer abgelaufen, so wird beispielsweise das Heizen und/oder das Drehen des Misch- und/oder Schneidwerkzeugs automatisiert gestoppt.

Ist die Küchenmaschine 1 eingeschaltet und wird auf den Deckel 6 gedrückt, so erscheint beispielsweise eine Gewichtsanzeige im Display 12 der Küchenmaschine 1. Wird anschließend ein Lebensmittel in das Zubereitungsgefäß eingefüllt, so wird das Gewicht des eingefüllten Lebensmittels auf dem Display 12 angezeigt. Wird beispielsweise im Anschluss daran auf die Beschriftung "MENU" gedrückt, so verschwindet beispielsweise die Anzeige eines Gewichts auf dem Display 12. Es kann stattdessen eine andere Anzeige erscheinen.

Es kann auch sein, dass eine kreisförmige Bewegung entlang des Kreises 11 für ein Steuern des Betriebs der Küchenmaschine 1 genutzt werden kann.

Die Figur 2 zeigt eine Aufsicht auf ein Küchengerät mit einer Oberseite 13. Auf der Oberseite 13 gibt es einen Heizfläche 14. Die Heizfläche 14 kann erhitzt werden. Die Heizfläche 14 kann eine Stellfläche für ein Zubereitungsgefäß 2 sein. Am unteren Bildrand unterhalb der Heizfläche 14 ist ein Schiebereglersymbol 15 optisch dargestellt. Zwischen dem Schiebereglersymbol 15 und Heizfläche 14 gibt es eine Beschriftung. Auf der linken Seite der Beschriftung ist das Wort "off" zu sehen. Im mittleren Bereich gibt es die Beschriftung "37 Grad Celsius". Ganz rechts gibt es die Beschriftung "max". Durch das Schiebereglersymbol 15 kann eine Solltemperatur für die Heizfläche 14 eingestellt werden, indem eine Gleitbewegung bzw. Wischbewegung entlang des Schiebereglersymbols 15 durchgeführt wird. Wird auf das Kreissymbol unterhalb von "off" gedrückt, so wird das Heizen ausgeschaltet. Die Beschriftung "37 Grad Celsius" zeigt die Position auf dem Schiebereglersymbol 15 an, die durch eine Gleitbewegung bzw. Wischbewegung zu erreichen ist, um die Solltemperatur auf 37°C einzustellen. Die Beschriftung "max" zeigt die Position auf dem Schiebereglersymbol 15 an, die durch eine Gleitbewegung bzw. Wischbewegung zu erreichen ist, um die maximal mögliche Solltemperatur einzustellen. Es kann für das Einstellen einer Solltemperatur erforderlich sein, dass immer ausgehend von der Position "off" eine Wischbewegung entlang des auf der Oberseite 13 dargestellten Schiebereglersymbols 15 durchgeführt werden muss, um eine Solltemperatur einstellen zu können. Dadurch wird vermieden, dass versehentliche Krafteinwirkungen das Einstellen einer Solltemperatur unplanmäßig zur Folge haben können.

Ein bestimmter Temperaturwert kann alternativ aber auch im Fall eines Symbols 15 durch einfaches Drücken eingestellt werden. Es kann also auch auf Wischbewegungen verzichtet werden. Das Symbol 15 kann auch weitere Angaben zu Temperaturwerten umfassen wie zum Beispiels 100°C, um einen Temperatursollwert von 100°C leicht auswählen zu können.

Es kann sein, dass aus Zuverlässigkeitsgründen für das Einstellen einer Solltemperatur beispielsweise erst auf den Bereich des optisch gezeigten Schiebereglersymbols 15 einfach oder mehrfach gedrückt werden muss, um im Anschluss daran zeitlich begrenzt durch eine Wischbewegung eine Solltemperatur einstellen zu können.

Es kann anhand des Kraftanstiegs und/ oder der Art und Stärke der Krafteinwirkung unterschieden werden zwischen einer unplanmäßigen Krafteinwirkung und einer planmäßigen Krafteinwirkung. Nur solche Krafteinwirkungen, die als planmäßig erkannt werden, können eine Solltemperatur einstellen. Auch so kann alternativ oder ergänzend vermieden werden, dass Solltemperaturen unplanmäßig eingestellt werden können.

In gestrichelten Kreisen ist die Position der Kraftsensoren 9 gezeigt, die sich unterhalb der Oberseite 13 befinden, d. h. unterhalb der Ebene der Figur 2. Die Kraftsensoren können sich auf der Unterseite des Küchengeräts befinden und als Füße dienen. Die Oberseite kann aber auch durch eine beweglich angeordnete Platte gebildet sein und die Kraftsensoren 9 können beispielsweise unmittelbar unterhalb Platte angeordnet sein. Die Kraftsensoren 9 können wie gezeigt ein Dreieck mit drei gleichen Seiten aufspannen.

Das Küchengerät kann ein Display aufweisen, das sich beispielsweise an einer Seitenwand befindet. Das Küchengerät kann beispielsweise per Funk mit einem anderen Gerät verbunden sein, um ein Display des anderen Geräts nutzen zu können. Auf dem Display kann beispielsweise eine eingestellte Solltemperatur angezeigt werden. Auf dem Display kann beispielsweise ein gemessenes Gewicht angezeigt werden.

Ist ein Zubereitungsgefäß auf die Heizfläche gestellt worden, so kann die Steuerungseinrichtung des Küchengeräts beispielsweise automatisiert erkennen, wenn ein Lebensmittel in das Zubereitungsgefäß gegeben wird. Eine automatisierte Erkennung ist möglich aufgrund der Positionserkennung, einer Analyse des Kraftanstiegs und/oder der Kraft und zwar hinsichtlich Größe und/oder Länge der Krafteinwirkung, die durch das Lebensmittel auf die Heizfläche 14 ausgeübt wird. Durch Vergleich mit hinterlegten Referenzwerten kann eine solche automatisierte Erkennung erfolgen. Wird automatisiert erkannt, dass ein Lebensmittel in das Gefäß gegeben wird, so kann beispielsweise automatisiert eine Gewichtsmessung und Anzeige des gemessenen Gewichts erfolgen. Ein solches automatisiertes Erkennen kann aber auch anders genutzt werden, so zum Beispiel als Voraussetzung dafür, dass die Heizfläche 14 erhitzt werden kann.

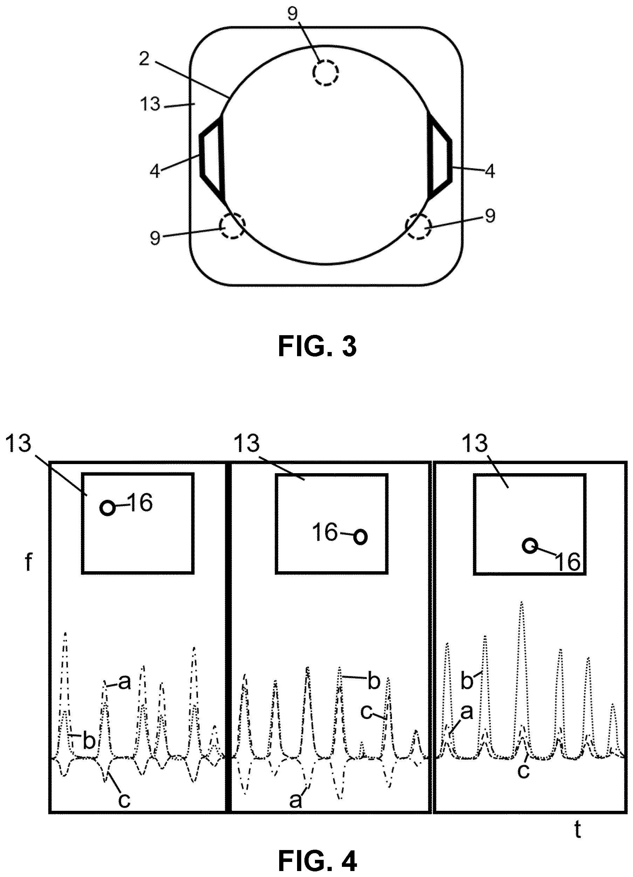

Die Figur 3 zeigt eine Aufsicht auf ein Küchengerät mit einer Oberseite 13. Auf der Oberseite 13 gibt es ein Zubereitungsgefäß 2. Das Zubereitungsgefäß 2 kann eine integrierte Heizung umfassen, um das Zubereitungsgefäß 2 erhitzen zu können. Das Zubereitungsgefäß 2 kann fest mit der Oberseite 13 verbunden sein. Das Zubereitungsgefäß 2 kann auf einer Stellfläche der Oberseite 13 abgestellt sein. Das Zubereitungsgefäß 2 kann dann von der Stellfläche entfernt werden und mobil genutzt werden. Alternativ kann die Stellfläche beheizbar sein, um das Zubereitungsgefäß 2 erhitzen zu können. In einer weiteren Ausführungsform kann die Stellfläche Spulen umfassen, wodurch das Zubereitungsgefäß induktiv geheizt werden kann.

Das in der Figur 3 gezeigte Küchengerät ist so eingerichtet, dass dieses erkennen kann, wenn auf einen Griff 4 des Zubereitungsgefäßes 2 gedrückt wird. Wird auf einen Griff gedrückt, so kann dadurch der Betrieb des Küchengeräts gesteuert werden. Wird auf den Deckel des Küchengeräts gedrückt, so kann der Betrieb des Küchengeräts nicht gesteuert werden oder aber es stehen nur sehr eingeschränkt Steuerungsmöglichkeiten zur Verfügung wie das Einschalten einer Wiegefunktion für das Wiegen von Lebensmitteln, die in das Zubereitungsgefäß 2 gegeben werden. Das Küchengerät kann so eingerichtet sein, dass auch die Oberseite 14, die sich neben dem Zubereitungsgefäß 2 befindet, für ein Steuern des Betriebs des Küchengeräts genutzt werden kann.

Es ist aber auch möglich, dass an dem Griff 4 gezogen wird, dadurch eine Kippbewegung bewirkt und so der Betrieb des Küchengeräts gesteuert wird.

In der Figur 4 wird ein Ausschnitt eines Randbereichs einer Oberseite 13 eines Küchengeräts gezeigt. Bei einem durchgeführten Versuch gab es in Aufsicht auf die Oberseite 13 gesehen links oben einen ersten Kraftsensor, unten in der Mitte einen zweiten Kraftsensor und rechts oben einen dritten Kraftsensor. Die Anordnung der Kraftsensoren unterhalb der Oberseite 13 entsprach der in der Figur 2 gezeigten Anordnung. Gezeigt werden drei verschiedene Versuchsergebnisse. In den drei verschiedenen Versuchen wurde auf verschiedene Positionen 16 mehrmals mit unterschiedlicher Kraft gedrückt. Teilweise lagen die verschiedenen Positionen lediglich 10 mm auseinander.

Aufgetragen ist in der Figur 4 unterhalb der Ausschnitte einer Oberseite 13 die Kraft f gegen die Zeit t. Es gibt eine Messkurve a für den ersten Kraftsensor, die durch eine Strich-Punkt-Linie dargestellt ist. Es gibt eine Messkurve b für den zweiten Kraftsensor, die durch eine punktierte Linie dargestellt ist. Es gibt eine Messkurve c für den dritten Kraftsensor, die durch eine gestrichelte Linie dargestellt ist.

Beim ersten Versuch wurde auf der linken Seite in der oberen Hälfte des Ausschnitts der Oberseite 13 gedrückt (Position 16 im ersten, links gezeigten Ausschnitt der Oberseite 13). Der erste Kraftsensor registrierte starke Kräfte f und der dritte Kraftsensor registrierte immer noch relativ starke Kräfte f. Der zweite Kraftsensor registrierte negative Kräfte. Der erste und der dritte Fuß wurden also belastet. Der zweite Fuß wurde entlastet.

Beim zweiten Versuch wurde auf der rechten Seite in der unteren Hälfte gedrückt (Position 16 im zweiten, in der Mitte gezeigten Ausschnitt der Oberseite 13). Der erste Kraftsensor registrierte negative Kräfte f. Die beiden anderen Kraftsensoren registrierten in etwa gleich starke Kräfte f. Der erste Fuß wurde also entlastet. Die beiden anderen Füße wurden ähnlich stark belastet.

Beim dritten Versuch wurde in der unteren Hälfte in der Mitte gedrückt (Position 16 im dritten, rechts gezeigten Ausschnitt der Oberseite 13). Der zweite Kraftsensor registrierte starke Kräfte f. Die beiden anderen Kraftsensoren registrierten in etwa ähnlich starke Kräfte f. Der zweite Fuß wurde folglich stark belastet. Die beiden anderen Füße wurden etwa ähnlich, aber vergleichsweise gering, belastet.

Die Versuche verdeutlichen, dass sehr unterschiedliche Messergebnisse in Abhängigkeit von der Position des Drückens erzielt werden, die auch eindeutig der jeweiligen Position zugeordnet werden können.

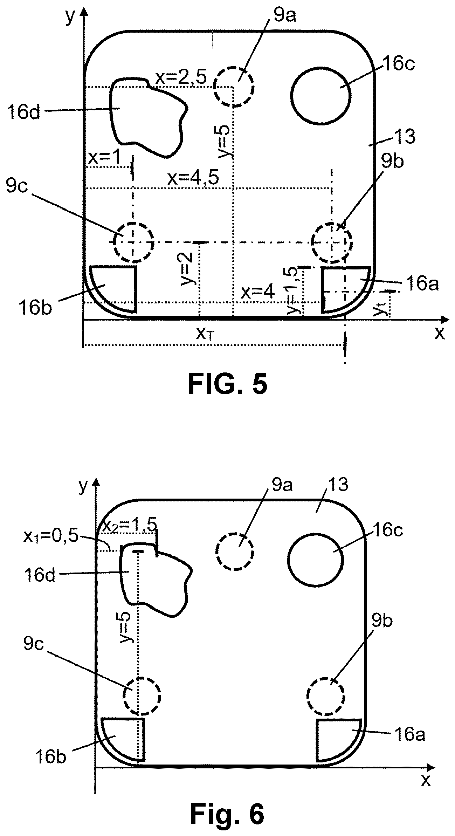

Im Folgenden wird beschrieben, wie Messergebnisse ausgewertet werden können. Das in Figur 5 gezeigte Gerät ist in der Draufsicht gezeigt. Es steht auf drei angedeuteten Füßen 9a, 9b und 9c. Die Füße 9a, 9b und 9c befinden sich auf der Unterseite des Geräts und sind Kraftsensoren einer Waage. Die exakte Position der Füße 9a, 9b, 9c ist bekannt. Darüber hinaus sind auf der Geräteoberseite 13 vier unterschiedliche Gehäuseregionen 16a, 16b, 16c und 16d gekennzeichnet, über die Toucheingaben, also Eingaben durch Drücken, erlaubt sind. Im folgenden Beispiel soll über die vordere rechte Ecke und damit über die Gehäuseregion 16a eine Toucheingabe erfolgen und über die drei Füße 9a, 9b und 9c dieser Region 16a eindeutig zugeordnet werden.

So lassen sich im gerätefesten x/y-Koordinatensystem zunächst die Positionen der drei Füße der Waage bestimmen (siehe dazu auch die in der Figur 5 angegebenen Werte der Koordinaten):

- Waagenfuß 9a: (2,5 / 5)
- Waagenfuß 9b: (4,5 / 2)
- Waagenfuß 9c: (1 / 2)

Nun lässt sich durch drei (im ersten Schritt statische, linear unabhängige) mechanische Gleichungen die Position des Krafteinleitungspunkts im x/y-Koordinatensystem und der Betrag der Kraft f in Abhängigkeit den gemessenen Kräfte $f_{9a}$, $f_{9b}$, $f_{9c}$ ermitteln, wobei $f_{9a}$ die von dem Waagenfuß 9a gemessene Kraft ist, $f_{9b}$ die von dem Waagenfuß 9b gemessene Kraft ist und $f_{9c}$ die von dem Waagenfuß 9c gemessene Kraft ist.

Für das Kräftegleichgewicht der aller Kräfte $f_z$ in z-Richtung (also in die gezeigte Ebene hinein) gilt: Die Summe aller von außen eingeleiteten Kräfte entspricht der Summe der Kräfte an den (drei) Waagenfüßen 9a, 9b, 9c:

$$\Sigma\ f_z = 0 \quad \leftrightarrow \quad f_{9a} + f_{9b} + f_{9c}\ = f$$

Darüber hinaus ergeben sich zwei Gleichungen aus den Momentengleichgewichten für die Momentenkräfte Mx um die x- und My um die y-Achse.

Für das Momentengleichgewicht um die x-Achse gilt:

$$\Sigma\ Mx = 0 \quad \leftrightarrow \quad f_{9a}\ ^*y_{9a}\ + f_{9b}\ ^*\ y_{9a}\ + f_{9c}\ ^*\ y_{9c}\ = f^*y_t\ ,$$

wobei $y_{9a}$ die y-Koordinate des Fußes 9a ist, $y_{9b}$ die y-Koordinate des Fußes 9b ist und $y_{9c}$ die y-Koordinate des Fußes 9c ist.

Werden nun die entsprechenden Koordinaten aus der Figur 5 in die Gleichung eingesetzt, so folgt:

$$\Sigma\ Mx = 0 \quad \leftrightarrow \quad f_{9a}\ ^*\ 5\ + f_{9b}\ ^*\ 2\ + f_{9c}\ ^*\ 2\ = f^*y_t$$

Für das Momentengleichgewicht um die y-Achse gilt entsprechend:

$$\Sigma\ My = 0 \quad \leftrightarrow \quad f_{9a}\ ^*x_{9a}\ + f_{9b}\ ^*\ x_{9a}\ + f_{9c}\ ^*\ x_{9c}\ = f^*x_t,$$

wobei $x_{9a}$ die x-Koordinate des Fußes 9a ist, $x_{9b}$ die x-Koordinate des Fußes 9b ist und $x_{9c}$ die x-Koordinate des Fußes 9c ist.

Werden die aus der Figur 5 ersichtlichen Koordinaten eingesetzt, so folgt:

$$\Sigma\ My = 0 \quad \leftrightarrow \quad f_{9a}\ ^*2,5\ + f_{9b}\ ^*\ 4,5\ + f_{9c}\ ^*\ 1\ = f^*x_t$$

Diese drei linear unabhängigen Gleichungen haben drei Unbekannte:

- Kraft der Toucheingabe f
- x-Koordinate der Toucheingabe $x_t$
- y-Koordinate der Toucheingabe yt.

Dieses Gleichungssystem lässt sich eindeutig lösen. Mit anderen Worten lässt sich aus den drei Messwerten der Kraftsensoren 9a, 9b, 9c eindeutig berechnen, wo eine Vertikalkraft in das Gerät eingeleitet wurde und welchen Betrag sie hat.

Sind nun entsprechende Gehäuseregionen mathematisch beschrieben und digital beispielsweise in einer Datenbank hinterlegt so können Toucheingaben in unterschiedlichen Gehäuseregionen voneinander unterschieden werden und darüber hinaus die Kraft der Toucheingabe erfasst werden. Beispielsweise wurde die Gehäuseregion 16a wurde angeklickt, also auf die Gehäuseregion 16a gedrückt, wenn der ermittelte x-Wert der Toucheingabe >4 und gleichzeitig der y-Wert der Toucheingabe <1,5 ist.

Beliebige Gehäuseregionen können durch die zeilenweise Beschreibung in einer Datenbank digital abgelegt werden. Wird die gesamte Oberfläche einer Gehäuseregion, die für Toucheingaben genutzt werden soll, zeilenweise beschrieben, so wird jedem Zeilenwert y ein entsprechender x-Bereich zugeordnet. In der Figur 6 ist beispielhaft eine Zeile der Gehäuseregion 16c beschrieben durch Y=5 und 1,5≥X≥0,5. Wird so jede Zeile 0=y≤6 der Gehäuseoberfläche beschrieben, kann einer Toucheingabe ein binärer Wert "Touchregion: ja" oder "Touchregion: nein" zugeordnet werden und auf entsprechende Toucheingaben reagiert oder nicht reagiert werden.

Alternativ lässt sich die Oberfläche auch spaltenweise beschreiben.

Das hier exemplarisch für die x/y-Ebene dargestellte Verfahren lässt sich auch auf die beiden anderen Raumebenen (y/z), (x/z) oder entsprechende Kombinationen dieser übertragen. So können auch Toucheingaben, also Eingaben durch Drücken, auf schief im Raum liegenden Flächen erkannt und differenziert werden. Hierzu müssen in den oben genannten Gleichungen die entsprechenden Abstände ausgetauscht und/oder projiziert werden. Hierbei können Differenzierungsmaßnahmen angewendet werden, um zwischen einer planmäßigen Toucheingabe und unplanmäßigen Toucheingaben zuverlässig unterscheiden zu können, damit eine Fehlinterpretation von Toucheingaben ausgeschlossen wird. Zu den Differenzierungsmaßnahmen kann gehören, dass ein minimaler Druck und/oder ein maximaler Druck und/oder ein minimaler Druckanstieg und/oder ein maximaler Druckanstieg und/oder ein minimaler Zeitraum für das Drücken und/ oder ein maximaler Zeitraum für das Drücken vorausgesetzt werden, um als ein planmäßiges Drücken bzw. eine planmäßige Toucheingabe erkannt zu werden.

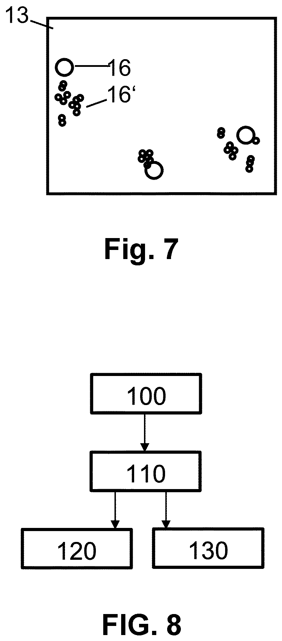

Die Figur 7 zeigt eine Auswertung der Messkurven aus der Figur 4, bei der auf Fehlerkompensationsberechnungen und -optimierungen verzichtet wurde. Gezeigt werden die Positionen 16, auf die gedrückt wurde. Die kleinen Kreise 16' in der Nachbarschaft der jeweiligen Positionen 16 sind die durch die Auswertung ermittelten Positionen. Obwohl die Positionen teilweise nur 10 mm auseinanderlagen, konnten die unterschiedlichen Positionen eindeutig auseinandergehalten werden. Auch die Auswertung bestätigte, dass sehr genau unterschiedliche Positionen unterschieden werden können, selbst wenn diese nur wenige Millimeter auseinanderliegen.

Eine Auswertung kann in einer statischen Ausführung wie nachfolgend angegeben erfolgen:

- Es werden die drei Kraftsensorinformationen bzw. -signale über der Zeit erfasst (Schritt 100 im Ablaufdiagramm der Figur 8).

- Es werden die Höchstwerte dieser Einzelwerte durch Beobachtung der Steigung über der Zeit detektiert erfasst (Schritt 110 im Ablaufdiagramm der Figur 8). Die Höchstwerte können ermittelt werden durch Ermitteln der Ableitung = 0 sowie durch Vorzeichenwechsel der Ableitung von + nach - kurz vor und nach dem Höchstwert.

- Heranziehen der drei Einzelwerte zu dem Zeitpunkt der Höchstwerte und Berechnung der Position (Schritt 120 im Ablaufdiagramm der Figur 8).

- Es können drei Einzelwerte zur Bestimmung der eingebrachten Vertikalkraft aufsummiert werden, um so beispielsweise eine Gewichtsinformation zu erhalten (Schritt 130 im Ablaufdiagramm der Figur 8).

- Es können bei der Auswertung oben beschriebene Differenzierungsmaßnahmen von Kraftsensorinformationen berücksichtigt werden, die dazu dienen ein planmäßiges Drücken von unplanmäßigen Krafteinwirkungen zu unterscheiden.

Im dynamischen Fall (beispielsweise für einen Schieberegler relevant) können nach einem detektierten initialen Drücken (siehe statischer Fall oben) die Kraftsensorinformationen weiter erfasst werden. Nun werden in darauffolgenden Zeitschritten jeweils aus den drei Kraftsensorinformationen die Positionen berechnet, um eine Wischbewegung bzw. Gleitbewegung zu erkennen.

Eine Wischbewegung kann unter Umständen auch ohne ein initiales Berühren erkannt werden, weil diese beispielsweise an einer dafür vorgesehenen Gehäuseposition stattfindet. Hierzu kann in die Oberseite eine Rinne oder eine ähnliche Vertiefung oder Erhebung eingebracht sein, die die Wischbewegung führt und den Benutzer leitet.

**Patentansprüche**

1. Küchengerät (1) mit einer Steuerungseinrichtung für die Steuerung des Betriebs des Küchengeräts (1) und einer Waage für ein Messen eines Gewichts von Lebensmitteln, **dadurch gekennzeichnet, dass** die Steuerungseinrichtung des Küchengeräts (1) den Betrieb des Küchengeräts (1) in Abhängigkeit von einem durch die Waage erkannten Drücken auf die Oberseite (4, 11, 13, 15) des Küchengeräts (1) in Abhängigkeit von der Position des Drückens steuern kann, wobei die Waage Kraftsensoren für die Gewichtsmessung und für eine Bestimmung der Position des Drückens umfasst.

2. Küchengerät (1) nach dem vorhergehenden Anspruch, **dadurch gekennzeichnet, dass** der Bereich des Bodens eines Zubereitungsraums des Küchengeräts (1) und/oder der Bereich genau oberhalb des Bodens eines Zubereitungsraums des Küchengeräts (1) und/oder der Bereich einer Stellfläche (14) für ein Zubereitungsgefäß (2) zumindest während eines vorgegebenen Betriebszustands des Küchengeräts (1) davon ausgenommen ist, dass der Betrieb des Küchengeräts (1) gesteuert werden kann.

3. Küchengerät (1) nach einem der vorhergehenden Ansprüche, **dadurch gekennzeichnet, dass** das Küchengerät (1) nebeneinander angeordnete Kraftsensoren (9) für eine Gewichtsmessung und für eine Bestimmung der Position des Drückens umfasst.

4. Küchengerät (1) nach dem vorhergehenden Anspruch, **dadurch gekennzeichnet, dass** das Küchengerät (1) genau drei nebeneinander angeordnete Kraftsensoren (9) umfasst, die zweidimensional verteilt angeordnet sind.

5. Küchengerät (1) nach einem der beiden vorhergehenden Ansprüche, **dadurch gekennzeichnet, dass** ein jeder Kraftsensor (9) ein Fuß des Küchengeräts (1) ist.

6. Küchengerät (1) nach dem vorhergehenden Anspruch, **dadurch gekennzeichnet, dass** das Küchengerät (1) so eingerichtet ist, dass aus den Kräften, die auf die Füße (9) ausgeübt und von der Waage erkannt werden, die Position eines Drückens auf das Küchengerät (1) ermittelt wird.

7. Küchengerät (1) nach einem der vorhergehenden Ansprüche, **dadurch gekennzeichnet, dass** das Küchengerät (1) so eingerichtet ist,

   • dass mithilfe der Waage die Stärke der durch ein Drücken bewirkten Druckkraft auf die Oberseite (4, 11, 13, 15) des Küchengeräts (1) erkannt werden kann und die Steuerungseinrichtung des Küchengeräts (1) den Betrieb des Küchengeräts (1) in Abhängigkeit von der Stärke der Druckkraft steuern kann und/oder
   • dass mithilfe der Waage eine Veränderung der Position des Drückens auf die Oberseite (4, 11, 13, 15) des Küchengeräts (1) erkannt werden kann und die Steuerungseinrichtung des Küchengeräts (1) den Betrieb des Küchengeräts (1) in Abhängigkeit von der Veränderung der Position steuern kann und/oder
   • dass mithilfe der Waage die Dauer des Drückens auf die Oberseite (4, 11, 13, 15) des Küchengeräts (1) erkannt werden kann und die Steuerungseinrichtung des Küchengeräts (1) den Betrieb des Küchengeräts (1) in Abhängigkeit von der Dauer steuern kann und/oder
   • dass mithilfe der Waage die Häufigkeit des Drückens innerhalb eines vorgegebenen Zeitraums auf die Oberseite (4, 11, 13, 15) des Küchengeräts (1) erkannt werden kann und die Steuerungseinrichtung des Küchengeräts (1) den Betrieb des Küchengeräts (1) in Abhängigkeit von der Häufigkeit steuern kann.

8. Küchengerät (1) nach einem der vorhergehenden Ansprüche, **dadurch gekennzeichnet, dass** mithilfe der Waage das Küchengerät (1) eingeschaltet und/oder ausgeschaltet werden kann und/oder das für den Betrieb des Küchengeräts (1) einstellbare Werte stufenlos oder stufenweise mithilfe der Waage eingestellt werden können.

9. Küchengerät (1) nach einem der vorhergehenden Ansprüche, **dadurch gekennzeichnet, dass** das Küchengerät (1) so eingerichtet ist, dass durch ein starkes, von der Waage erkanntes Drücken auf das Küchengerät (1) das Küchengerät (1) heruntergefahren wird und/oder durch einen von der Waage erkannten Schlag auf das Küchengerät (1) das Küchengerät (1) notfallmäßig ausgeschaltet wird und/oder dass durch ein leichtes, von der Waage erkanntes Drücken eine Funktion des Küchengeräts (1) eingeschaltet wird.

10. Küchengerät (1) nach dem vorhergehenden Anspruch, **dadurch gekennzeichnet, dass** durch ein leichtes, von der Waage erkanntes Drücken die Wiegefunktion für das Wiegen von Lebensmitteln eingeschaltet wird.

11. Küchengerät (1) nach einem der vorhergehenden Ansprüche, **dadurch gekennzeichnet, dass** das Küchengerät (1) so eingerichtet ist, dass die Steuerungseinrichtung des Küchengeräts (1) den Betrieb des Küchengeräts (1) in Abhängigkeit von einem erkannten Drücken auf die Oberseite (4, 11, 13, 15) des Küchengeräts (1) nur dann steuern kann, wenn der Druck einen vorgegebenen minimalen Druckschwellwert überschreitet und/oder wenn der Druck einen vorgegebenen maximalen Druckschwellwert unterschreitet und/oder wenn der Druck einen vorgegebenen minimalen Druckanstiegsschwellwert überschreitet und/oder wenn der Druck einen vorgegebenen maximalen Druckanstiegsschwellwert unterschreitet.

12. Küchengerät (1) nach einem der vorhergehenden Ansprüche, **dadurch gekennzeichnet, dass** das Küchengerät (1) eine Speise mithilfe eines elektronisch gespeicherten Rezepts zumindest teilautomatisiert zubereiten kann und das Küchengerät (1) so eingerichtet ist, dass die Steuerungseinrichtung des Küchengeräts (1) den Betrieb des Küchengeräts (1) in Abhängigkeit von einem erkannten Drücken auf die Oberseite (4, 11, 13, 15) des Küchengeräts (1) in Kombination mit vom Rezept abhängigen Informationen steuern kann.

13. Küchengerät (1) nach einem der vorhergehenden Ansprüche, **dadurch gekennzeichnet, dass** das Küchengerät (1) so eingerichtet ist, dass die Steuerungseinrichtung des Küchengeräts (1) den Betrieb des Küchengeräts (1) in Abhängigkeit von einem erkannten Drücken auf die Oberseite (4, 11, 13, 15) des Küchengeräts (1) in Kombination mit einem Gerätezustand des Küchengeräts (1) steuern kann.

14. Küchengerät (1) nach dem vorhergehenden Anspruch, **dadurch gekennzeichnet, dass** das Küchengerät (1) ein Basisgerät mit einer Stellfläche für das Zubereitungsgefäß (2) umfasst und die Steuerungseinrichtung des Küchengeräts (1) eine Funktion des Küchengeräts (1) in Abhängigkeit von einem erkannten Drücken auf die Oberseite (4, 11, 13, 15) des Gehäuses nur dann steuern kann, wenn das Zubereitungsgefäß (2) auf der Stellfläche aufgestellt ist.

15. Küchengerät (1) nach dem vorhergehenden Anspruch, **dadurch gekennzeichnet, dass** das Küchengerät (1) eine Küchenmaschine ist, die ein Misch- und/oder Schneidwerkzeug im Zubereitungsgefäß (2) und einen Motor im Basisgerät für ein Antreiben des Misch- und/oder Schneidwerkzeugs sowie optional eine Heizeinrichtung umfasst.

**Claims**

1. Kitchen appliance (1) comprising a control device for controlling the operation of the kitchen appliance (1) and a scale for measuring a weight of foodstuffs, **characterized in that** the control device of the kitchen appliance (1) is able to control the operation of the kitchen appliance (1) in dependence on a pressing on the upper side (4, 11, 13, 15) of the kitchen appliance (1) detected by the scale in dependence on the position of the pressing, wherein the scale comprises force sensors for measuring the weight and for determining the position of the pressing.

2. Kitchen appliance (1) according to the preceding claim, **characterized in that** the area of the bottom of a preparation space of the kitchen appliance (1) and/or the area just above the bottom of a preparation space of the kitchen appliance (1) and/or the area of a placement surface (14) for a preparation vessel (2) is excluded from the fact that the operation of the kitchen appliance (1) can be controlled at least during a predetermined operating state of the kitchen appliance (1).

3. Kitchen appliance (1) according to one of the preceding claims, **characterized in that** the kitchen appliance (1) comprises juxtaposed force sensors (9) for a weight measurement and for a determination of the position of pressing.

4. Kitchen appliance (1) according to the preceding claim, **characterized in that** the kitchen appliance (1) comprises exactly three juxtaposed force sensors (9), which are arranged in a two-dimensionally distributed manner.

5. Kitchen appliance (1) according to one of the preceding claims, **characterized in that** each force sensor (9) is a foot of the kitchen appliance (1).

6. Kitchen appliance (1) according to the preceding claim, **characterized in that** the kitchen appliance (1) is configured such that from the forces exerted on the feet (9) and detected by the scale, the position of a pressing on the kitchen appliance (1) is determined.

7. Kitchen appliance (1) according to one of the preceding claims, **characterized in that** the kitchen appliance (1) is configured such,

   • that the strength of the pressure force on the upper side (4, 11, 13, 15) of the kitchen appliance (1) caused by a pressing can be detected by means of the scale and the control device of the kitchen appliance (1) is able to control the operation of the kitchen appliance (1) in dependence on the strength of the pressure force and/or
   • that a change in the position of pressing on the upper side (4, 11, 13, 15) of the kitchen appliance (1) can be detected by means of the scale and the control device of the kitchen appliance (1) is able to control the operation of the kitchen appliance (1) in dependence on the change in position, and/or
   • that the duration of pressing on the upper side (4, 11, 13, 15) of the kitchen appliance (1) can be detected by means of the scale, and the control device of the kitchen appliance (1) is able to control the operation of the kitchen appliance (1) in dependence on the duration, and/or
   • that the frequency of pressing on the upper side (4, 11, 13, 15) of the kitchen appliance (1) within a predetermined time period can be detected by means of the scale and the control device of the kitchen appliance (1) is able to control the operation of the kitchen appliance (1) in dependence on the frequency.

8. Kitchen appliance (1) according to one of the preceding claims, **characterized in that** the kitchen appliance (1) can be switched on and/or off by means of the scale and/or that values adjustable for the operation of the kitchen appliance (1) can be adjusted continuously or stepwise by means of the scale.

9. Kitchen appliance (1) according to one of the preceding claims, **characterized in that** the kitchen appliance (1) is configured such that the kitchen appliance (1) is shut down by a strong pressing on the kitchen appliance (1) detected by the scale and/or the kitchen appliance (1) is switched off in an emergency by a blow on the kitchen appliance (1) detected by the scale and/or a function of the kitchen appliance (1) is switched on by a light pressing detected by the scale.

10. Kitchen appliance (1) according to the preceding claim, **characterized in that** the weighing function for weighing foodstuffs is switched on by a light pressing detected by the scale.

**11.** Kitchen appliance (1) according to one of the preceding claims, **characterized in that** the kitchen appliance (1) is configured such that the control device of the kitchen appliance (1) is able to control the operation of the kitchen appliance (1) in dependence on a detected pressing on the upper side (4, 11, 13, 15) of the kitchen appliance (1) only if the pressure exceeds a predetermined minimum pressure threshold and/or if the pressure falls below a predetermined maximum pressure threshold and/or if the pressure exceeds a predetermined minimum pressure rise threshold and/or if the pressure falls below a predetermined maximum pressure rise threshold.

**12.** Kitchen appliance (1) according to one of the preceding claims, **characterized in that** the kitchen appliance (1) is able to prepare a food by means of an electronically stored recipe in an at least partially automated manner and the kitchen appliance (1) is configured such that the control device of the kitchen appliance (1) is able to control the operation of the kitchen appliance (1) in dependence on a detected pressing on the upper side (4, 11, 13, 15) of the kitchen appliance (1) in combination with information dependent on the recipe.

**13.** Kitchen appliance (1) according to one of the preceding claims, **characterized in that** the kitchen appliance (1) is configured such that the control device of the kitchen appliance (1) is able to control the operation of the kitchen appliance (1) in dependence on a detected pressing on the upper side (4, 11, 13, 15) of the kitchen appliance (1) in combination with an appliance state of the kitchen appliance (1).

**14.** Kitchen appliance (1) according to the preceding claim, **characterized in that** the kitchen appliance (1) comprises a base appliance having a placement surface for the preparation vessel (2) and the control device of the kitchen appliance (1) is able control a function of the kitchen appliance (1) in dependence on a detected pressing on the upper side (4, 11, 13, 15) of the housing only when the preparation vessel (2) is placed on the placement surface.

**15.** Kitchen appliance (1) according to the preceding claim, **characterized in that** the kitchen appliance (1) is a food processor comprising a mixing and/or cutting tool in the preparation vessel (2) and a motor in the base appliance for driving the mixing and/or cutting tool, and optionally a heating device.

**Revendications**

**1.** Appareil de cuisine (1) avec un dispositif de commande pour la commande du fonctionnement de l'appareil de cuisine (1) et une balance pour la mesure d'un poids d'aliments, **caractérisé en ce que** le dispositif de commande de l'appareil de cuisine (1) peut commander le fonctionnement de l'appareil de cuisine (1) en fonction d'une pression détectée par la balance sur la face supérieure (4, 11, 13, 15) de l'appareil de cuisine (1) en fonction de la position de la pression, dans lequel la balance comprend des capteurs de force pour la mesure de poids et pour une détermination de la position de la pression.

**2.** Appareil de cuisine (1) selon la revendication précédente, **caractérisé en ce que** la zone du fond d'un espace de préparation de l'appareil de cuisine (1) et/ou la zone située juste au-dessus du fond d'un espace de préparation de l'appareil de cuisine (1) et/ou la zone d'une surface de pose (14) pour un espace de préparation (2) est exclue de la possibilité de commander le fonctionnement de l'appareil de cuisine (1) au moins pendant un état de fonctionnement prédéterminé de l'appareil de cuisine (1).

**3.** Appareil de cuisine (1) selon l'une des revendications précédentes, **caractérisé en ce que** l'appareil de cuisine (1) comprend des capteurs de force (9) disposés côte à côte pour une mesure de poids et pour une détermination de la position de la pression.

**4.** Appareil de cuisine (1) selon la revendication précédente, **caractérisé en ce que** l'appareil de cuisine (1) comprend exactement trois capteurs de force (9) disposés côte à côte, qui sont répartis de manière bidimensionnelle.

**5.** Appareil de cuisine (1) selon l'une des deux revendications précédentes, **caractérisé en ce que** chaque capteur de force (9) est un pied de l'appareil de cuisine (1).

**6.** Appareil de cuisine (1) selon la revendication précédente, **caractérisé en ce que** l'appareil de cuisine (1) est configuré de sorte que la position d'une pression sur l'appareil de cuisine (1) est détectée à partir des forces qui sont exercées sur les pieds (9) et détectées par la balance.

**7.** Appareil de cuisine (1) selon l'une quelconque des revendications précédentes, **caractérisé en ce que** l'appareil de cuisine (1) est configuré de sorte

- qu'à l'aide de la balance, l'intensité de la force de pression résultant d'une pression sur la face supérieure (4, 11, 13, 15) de l'appareil de cuisine (1) peut être détectée et le dispositif de commande de l'appareil de cuisine (1) peut commander le fonctionnement de l'appareil de cuisine (1) en fonction de l'intensité de la force de pression et/ou
- qu'à l'aide de la balance, une modification de la position de la pression sur la face supérieure (4, 11, 13, 15) de l'appareil de cuisine (1) peut être détectée et que le dispositif de commande de l'appareil de cuisine (1) peut commander le fonctionnement de l'appareil de cuisine (1) en fonction de la modification de la position et/ou
- qu'à l'aide de la balance, la durée de la pression sur la face supérieure (4, 11, 13, 15) de l'appareil de cuisine (1) peut être détectée et que le dispositif de commande de l'appareil de cuisine (1) peut commander le fonctionnement de l'appareil de cuisine (1) en fonction de la durée et/ou
- qu'à l'aide de la balance, la fréquence de la pression sur la face supérieure (4, 11, 13, 15) de l'appareil de cuisine (1) pendant un intervalle de temps prédéfini peut être détectée et que le dispositif de commande de l'appareil de cuisine (1) peut commander le fonctionnement de l'appareil de cuisine (1) en fonction de la fréquence.

8. Appareil de cuisine (1) selon l'une des revendications précédentes, **caractérisé en ce que** l'appareil de cuisine (1) peut être mis en marche et/ou arrêté à l'aide de la balance et/ou **en ce que** des valeurs réglables pour le fonctionnement de l'appareil de cuisine (1) peuvent être réglées en continu ou par paliers à l'aide de la balance.

9. Appareil de cuisine (1) selon l'une des revendications précédentes, **caractérisé en ce que** l'appareil de cuisine (1) est configuré de manière à ce que l'appareil de cuisine (1) est éteint par une forte pression sur l'appareil de cuisine (1) détectée par la balance et/ou que l'appareil de cuisine (1) est éteint d'urgence par un coup détecté par la balance et/ou que l'appareil de cuisine (1) est allumé par une légère pression sur l'appareil de cuisine (1) détectée par la balance.

10. Appareil de cuisine (1) selon la revendication précédente, **caractérisé en ce que** la fonction de pesage pour le pesage des aliments est activée par une légère pression détectée par la balance.

11. Appareil de cuisine (1) selon l'une des revendications précédentes, **caractérisé en ce que** l'appareil de cuisine (1) est configuré de sorte que le dispositif de commande de l'appareil de cuisine (1) peut commander le fonctionnement de l'appareil de cuisine (1) en fonction d'une pression détectée sur la face supérieure (4, 11, 13, 15) de l'appareil de cuisine (1) uniquement , lorsque la pression dépasse une valeur seuil de pression minimale prédéfinie et/ou lorsque la pression passe en dessous d'une valeur seuil de pression maximale prédéfinie et/ou lorsque la pression dépasse une valeur seuil d'augmentation de pression minimale prédéfinie et/ou lorsque la pression passe en dessous d'une valeur seuil d'augmentation de pression maximale prédéfinie.

12. Appareil de cuisine (1) selon l'une des revendications précédentes, **caractérisé en ce que** l'appareil de cuisine (1) peut préparer un aliment à l'aide d'une recette enregistrée électroniquement de manière au moins partiellement automatisée et l'appareil de cuisine (1) est configuré de sorte que le dispositif de commande de l'appareil de cuisine (1) peut commander le fonctionnement de l'appareil de cuisine (1) en fonction d'une pression détectée sur la face supérieure (4, 11, 13, 15) de l'appareil de cuisine (1) en combinaison avec des informations dépendantes de la recette.

13. Appareil de cuisine (1) selon l'une des revendications précédentes, **caractérisé en ce que** l'appareil de cuisine (1) est configuré de sorte que le dispositif de commande de l'appareil de cuisine (1) peut commander le fonctionnement de l'appareil de cuisine (1) en fonction d'une pression détectée sur la face supérieure (4, 11, 13, 15) de l'appareil de cuisine (1) en combinaison avec un état d'appareil de l'appareil de cuisine (1).

14. Appareil de cuisine (1) selon la revendication précédente, **caractérisé en ce que** l'appareil de cuisine (1) comprend un appareil de base avec une surface de pose pour le récipient de préparation (2) et le dispositif de commande de l'appareil de cuisine (1) peut commander une fonction de l'appareil de cuisine (1) en fonction d'une pression détectée sur la face supérieure (4, 11, 13, 15) du boîtier uniquement lorsque le récipient de préparation (2) est posé sur la surface de pose.

15. Appareil de cuisine (1) selon la revendication précédente, **caractérisé en ce que** l'appareil de cuisine (1) est une machine de cuisine qui comprend un outil de mélange et/ou de coupe dans le récipient de préparation (2) et un moteur dans l'appareil de base pour entraîner l'outil de mélange et/ou de coupe, ainsi, de manière facultative, qu'un dispositif de chauffage.

**FIG. 1**

**FIG. 2**

FIG. 3

FIG. 4

FIG. 5

Fig. 6

**Fig. 7**

**FIG. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3398495 A1
- EP 3781002 B1
- EP 3936016 A1
- DE 102008040740 A1